# EUROPÄISCHE PATENTSCHRIFT

(11) **EP 3 157 735 B1**
(45) Veröffentlichungstag und Bekanntmachung des Hinweises auf die Patenterteilung: **06.08.2025**
(21) Anmeldenummer: 15730136.7
(22) Anmeldetag: 17.06.2015
(51) Int. Cl.: B33Y 30/00, B29C 64/124, B29C 64/129, B29C 64/194, B29C 64/214, B29C 64/264, B33Y 10/00

(54) **EFFIZIENTERES VERFAHREN ZUR HERSTELLUNG DREIDIMENSIONALER OBJEKTE MITTELS RAPID-PROTOTYPING**
A MORE EFFICIENT METHOD FOR PRODUCING THREE-DIMENSIONAL OBJECTS BY MEANS OF A RAPID PROTOTYPING PROCESS
PROCÉDÉ POUR PRODUIRE DE MANIÈRE PLUS EFFICACE DES OBJETS TRIDIMENSIONNELS PAR PROTOTYPAGE RAPIDE

(30) Priorität: 18.06.2014 DE 102014108634
(43) Veröffentlichungstag der Anmeldung: 26.04.2017
(73) Patentinhaber: Kulzer GmbH, 63450 Hanau (DE)
(72) Erfinder: BAUER, Christian, 63825 Schöllkrippen (DE); WOLDEGERGIS, Yohannes, 63457 Hanau (DE); BRICK, Uwe, 07749 Jena (DE)
(74) Vertreter: Bendele, Tanja
(86) Internationale Anmeldenummer: PCT/EP2015/063567
(87) Internationale Veröffentlichungsnummer: WO 2015/193360

(56) Entgegenhaltungen:
- DE-A1- 4 414 775
- US-A1- 2007 284 547
- US-A1- 2010 152 873
- US-A1- 2014 052 288

## Beschreibung

Die Erfindung betrifft eine Vorrichtung und ein Verfahren zur Herstellung dreidimensionaler Objekte, insbesondere von zumindest Teilen dentaler, prothetischer Versorgungen, indem eine Abstreifeinrichtung in der Höhe über einem Behälter überstehenden Kunststoff in einen Auffangbehälter abstreift und eine Projektionsfläche bildet. Erfindungsgemäß werden eine Abstreifeinrichtung und eine Lichtquelle gekoppelt und simultan mit einer definierten Beabstandung über den flüssigen, lichthärtenden Kunststoff geführt, wobei die Abstreifeinrichtung in einem definierten Abstand unmittelbar vor der Lichtquelle hergeführt wird und die Projektionsfläche für das Belichtungsfeld der Lichtquelle ausbildet. Die Erfindung betrifft ebenfalls ein Verfahren zur Herstellung einer homogenisierten Lichtmengenverteilung mit einem Flächenlichtmodulator und ein Rapid-Prototyping-Verfahren, bei dem ein solches Verfahren zur Anwendung kommt.

Stereolithographie-Verfahren zählen zu den Rapid-Prototyping-Verfahren. Die Rapid-Prototyping Verfahren sind dreidimensionale Druckprozesse. Vorliegend werden mit Licht polymerisierbare (härtbare) Monomere oder Zusammensetzungen umfassend eine Mischung von Monomeren, vorzugsweise mit UV-Licht polymerisiert. Ausgehend von einem 3D-Modell im STL-Format wird dieses evtl. mit einer Stützkonstruktion, auch Support genannt versehen, um die Standfestigkeit in dem Bad auf der Bauplattform zu erhöhen. Das so erhaltene Modell wird anschließend digital in einzelne Schichten aufgeteilt, der Vorgang wird als Slicen bezeichnet. Die einzelnen Schichten werden in eine Maschinensteuerung eingelesen und dort entsprechend angepasst. Die Maschinensteuerung regelt die Bewegungsabfolge und das Belichtungsverfahren.

Aus dem Stand der Technik ist ebenfalls ein Verfahren bekannt, in dem über einen beweglichen Spiegel der Laser (Laser-Belichtungsverfahren) über die Projektionsfläche des polymerisierbaren Harzes projiziert wird. In der Regel werden zunächst die Konturen des dreidimensionalen Objektes und anschließend die Flächen des in Schichten aufgeteilten Objektes belichtet. Das Verfahren ist ein statisches Verfahren, in dem punktweise belichtet wird. Das Verfahren ist daher sehr zeitaufwendig.

Bei einem DLP-Verfahren wird eine Oberfläche über einen DLP-Chip (Digital-Light-Processing, ein Mikrospiegelreaktor) mit LED-Technik und einer optischen Leistung von 0,5 bis 100 Watt, bestrahlt. Das DLP-Verfahren ist ebenfalls nur als statisches Verfahren bekannt. Die Lichtquelle wird während der Belichtungsphase nicht bewegt (statisch) und belichtet in Standbildern jeweils neue zu polymerisierende Harzschichten.

Bei den bekannten Verfahren wird die Oberfläche mit einem Rakel abgezogen. Anschließend erfolgt nach einer Wartezeit erst der Belichtungsvorgang. Nach der Belichtung erfolgt erneut ein Rakeln der Oberfläche. Bedingt ist dies durch die aktuell bekannten Konstruktionen von RP-Druckern.

Bei den bekannten Rapid-Prototyping Verfahren kommen neben Ultraviolett-(UV)-Lasern auch zunehmend UV-LED-Beamer zum Einsatz. Verfahren hierzu sind beispielsweise aus der EP 1880830 A1 und der EP 1894705 A2 bekannt. Nachteilig an Lasern ist ihr punktförmiges Belichtungsfeld. Das UV-Licht der Lichtquelle wird auf einen lichthärtenden Kunststoff als Belichtungsfeld abgebildet. Bei der Abbildung werden eine Optik und ein Flächenlichtmodulator verwendet. Aufgrund der Optik kommt es zu einer inhomogenen Lichtverteilung beziehungsweise Intensitätsverteilung. Die Randbereiche des Belichtungsfelds haben dabei typischerweise eine niedrigere Intensität als die Bereiche im Zentrum des Belichtungsfelds. Dieser, auch als Tonnenbild bezeichnete Effekt führt dazu, dass der lichthärtende Kunststoff nicht an jeder Stelle die gleiche Intensität erhält und daher unterschiedlich also inhomogen aushärtet.

Die EP 1 982 824 A2 schlägt vor, die Intensitätsverteilung zu homogenisieren, indem die helleren Pixel des UV-Beamers auf das Intensitäts-Niveau der Pixel am Rand durch eine Grauverteilung reduziert werden.

Nachteilig ist hieran, dass die Grauverteilung nur durch eine genaue Steuerung der Intensität erreicht werden kann. Es ist also auch Aufgabe der Erfindung ein weniger aufwendiges Verfahren bereitzustellen, mit dem ein ähnlicher Effekt erzielt werden kann.

US2014/052288A1 offenbart eine Vorrichtung und Verfahren zur Herstellung dreidimensionaler Objekte unter Verwendung eines Vakuummessers. DE 44 14 775 A1 offenbart eine Vorrichtung und ein Verfahren zum Herstellen eines dreidimensionalen Objektes, wobei die Vorrichtung einen Laser mit Umlenkspiegel zum Ablenken und Positionieren eines Lichtstrahls aufweist. US2007/284547A1 offenbart ein Verfahren zur Einstellung von Licht mit im Wesentlichen gleicher Energie.

Die Aufgabe der Erfindung bestand darin, mit geringen konstruktiven Mitteln die Bauzeiten drastisch zu verkürzen, um den Prozess wirtschaftlicher zu gestalten. Somit bestand die Aufgabe, eine Vorrichtung und ein Verfahren zu entwickeln, mit denen in kürzeren Bauzeiten dreidimensionale Formkörper gedruckt werden können als in den bekannten statischen Verfahren. Ebenso bestand die Aufgabe mit einfachen Mitteln ein konstantes Niveau bezüglich der z-Achse an polymerisierbarem Material, wie einer Monomere umfassenden Zusammensetzung, bereitstellen zu können, ohne weitere Positioniervorrichtungen oder Messeinrichtungen zu benötigen. Ferner bestand die Aufgabe darin, eine konstante Füllhöhenregulierung zu ermöglichen. Insbesondere soll ein weniger aufwendiges Verfahren bereitgestellt werden, das insbesondere eine zufriedenstellende Homogenisierung der Lichtintensität des Belichtungsfeldes erreicht. Das Verfahren soll möglichst kostengünstig realisierbar sein.

Die Aufgaben der Erfindung werden gelöst durch eine Vorrichtung nach Anspruch 1 sowie ein Verfahren nach Anspruch 9. In der Vorrichtung wird lichthärtender Kunststoff mittels einer Lichtquelle polymerisiert, wobei eine Abstreifeinrichtung vor der Lichtquelle in einem festen Abstand geführt wird und eine simultane Erzeugung der planaren Projektionsfläche und Führen des Belichtungsfeldes der Lichtquelle in einem Verfahrensschritt bzw. in einem Durchgang erlaubt. Als ein Durchgang gilt eine Wegstrecke die die Lichtquelle von einem Umkehrpunkt einer Seite des Behälters der Vorrichtung bis zum Umkehrpunkt auf der gegenüberliegenden Seite des Behälters zurücklegt. Als lichthärtender Kunststoff gelten vorzugsweise Zusammensetzungen umfassend mit elektromagnetischer Strahlung polymerisierbare Monomere, bevorzugt dentale, UV-polymerisierbare Monomere.

Erfindungsgemäß erfolgt das Glätten mit dem Rakel und das Belichten quasi in einem Verfahrensschritt zur gleichen Zeit, wie nachfolgend erläutert wird. Erfindungsgemäß sind die Abstreifeinrichtung und das Belichtungsfeld nur wenige Millimeter beabstandet. Durch diese Maßnahme konnte die Bauzeit erheblich reduziert werden.

Gegenstand der Erfindung ist eine Vorrichtung, umfassend eine Baueinheit mit einer Lichtquelle, zum Herstellen eines dreidimensionalen Objektes mittels Belichtung eines flüssigen, lichthärtenden Kunststoffes, mit einem Behälter zur Aufnahme eines Bades des lichthärtenden, flüssigen Kunststoffes, mit einer Bauplattform zur Positionierung des Objektes relativ zur Oberfläche des Bades, wobei die Lichtquelle und eine Abstreifeinrichtung koppelbar sind und die Abstreifeinrichtung vor der Lichtquelle und/oder vor dem Belichtungsfeld angeordnet ist, wobei die Abstreifeinrichtung eine Kupplungsvorrichtung aufweist und der Lichtquelle oder der Baueinheit ein Kupplungselement zugeordnet ist, mit dem die Abstreifeinrichtung vor der Lichtquelle und/oder dem Belichtungsfeld hergeschoben wird, wobei das Kupplungselement lösbar an der Kupplungsvorrichtung eingreift und das Kupplungselement formschlüssig zur Kupplungsvorrichtung ausgebildet ist, wobei das Kupplungselement kraftschlüssig, elektrisch oder magnetisch lösbar mit der Kupplungsvorrichtung koppelbar ist, wobei die Kupplungsvorrichtung mindestens ein Element aufweist und das obere Ende der Abstreifeinrichtung in Form eines Elementes ausgebildet ist, wobei diese Elemente mit mindestens einem elastischen Element und mit mindestens einer Fixierung aneinander festgelegt sind, und wobei das Kupplungselement formschlüssig seitlich an die Elemente eingreift und formschlüssig zwischen den beiden mit einem elastischen Element und einem Fixierelement festgelegten Elementen mit einer definierten Kraft zwischen den beiden Elementen durchführbar ist, wobei die Vorrichtung einen Dämpfer aufweist, der ein Durchführen oder Durchrutschen des Kupplungselementes zwischen den beiden Elementen der Kupplungsvorrichtung auslöst.

Bevorzugt ist die Lichtquelle oder eine Baueinheit umfassend die Lichtquelle einem Motor zugeordnet, der die Baueinheit oder die Lichtquelle antreibt. Über diesen Antrieb wird vorzugsweise mittelbar die Abstreifeinrichtung mit angetrieben und entlang einer Achse des Behälters verfahren. Die Lichtquelle bzw. das Belichtungsfeld und die Abstreifeinrichtung sind etwa 20 bis 150 mm, in Bezug auf die x,y-Ebene, voneinander beanstandet, bevorzugt 20 bis 80 mm.

Nach einer besonders bevorzugten Ausführungsform umfasst diese Baueinheit 0 die Lichtquelle und ist mit der Abstreifeinrichtung koppelbar und bildet eine Gesamtbaueinheit 0# bzw. die gesamte Baueinheit. Dabei ist es weiter bevorzugt, wenn die Abstreifeinrichtung eine Kupplungsvorrichtung aufweist und der Lichtquelle oder der Baueinheit ein Kupplungselement, insbesondere eine Art Schwert, zugeordnet ist. Alternativ kann der Abstreifeinrichtung ein Kupplungselement und der Lichtquelle oder der Baueinheit eine Kupplungsvorrichtung zugeordnet sein. Dabei kann es auch bevorzugt sein, wenn das Kupplungselement mit einem Motor für den Antrieb versehen ist. Erfindungsgemäß wird die verfahrbare Lichtquelle, Baueinheit oder Gesamtbaueinheit mit einem Motor angetrieben. Entsprechend einer besonders bevorzugten Ausführungsform der Erfindung kann die Abstreifeinrichtung simultan zusammen mit der verfahrbaren Lichtquelle vor dem Belichtungsfeld der Lichtquelle, entlang einer Achse des Behälters (x, y- Ebene) geführt werden, wobei der Lichtquelle, der Baueinheit oder der Gesamtbaueinheit ein Antrieb zugeordnet ist.

Erfindungsgemäß greift das Kupplungselement lösbar an der Kupplungsvorrichtung ein, wobei das Kupplungselement formschlüssig zur Kupplungsvorrichtung ausgebildet ist. Bevorzugt kann das Kupplungselement mittels Formschluss mit der Kupplungsvorrichtung zusammenwirken. Dabei kann das Kupplungselement im Querschnitt die Form eines Polygon, wie eines Sechsecks annehmen, oder ein flaches Element mit zwei spitzen seitlichen Bereichen ausbilden, welches zwischen den Elementen der Kupplungsvorrichtung durchführbar oder durchrutschbar ist. Weitere dem Fachmann bekannte lösbare Verbindungen können erfindungsgemäß ausgebildet werden, wie eine Rutschkupplung, bevorzugt eine Sperrkörperkupplung, Verbindungsbeschlag, Nut-Feder. Generell kann das Kupplungselement mit der Kupplungsvorrichtung koppelbar sein, dies kann mechanisch, wie formschlüssig, kraftschlüssig, oder elektrisch oder magnetisch erfolgen. Ebenso kann das Kupplungselement mittels einer Achse derart verschwenkt werden, dass es im Umkehrpunkt so verschwenkt werden kann, dass die Abstreifeinrichtung immer vor dem Belichtungsfeld hergeführt wird.

Ebenso Gegenstand der Erfindung ist eine Vorrichtung umfassend eine Kupplungsvorrichtung mit mindestens einem Element, die der Abstreifeinrichtung zugeordnet ist und, wobei das obere Ende der Abstreifeinrichtung in Form eines Elementes ausgebildet ist, wobei diese Elemente mit mindestens einem elastischen Element und mit mindestens einer Fixierung aneinander festgelegt sind, und das Kupplungselement formschlüssig seitlich an die Elemente eingreift und formschlüssig zwischen den beiden mit einem elastischen Element und einem Fixierelement festgelegten Elementen mit einer definierten Kraft zwischen den beiden Elementen durchführbar ist. Der Kupplungsmechanismus wirkt wie eine Rutschkupplung. Vorzugsweise ist das Kupplungselement formschlüssig zu den Elementen der Kupplungsvorichtung ausgebildet. So kann das Kupplungselement die Form eines Schwertes aufweisen, dessen Geometrie vorzugsweise eine an die Kupplungsvorrichtung bzw. Kerbe A angepasst ist.

Ferner ist Gegenstand der Erfindung eine Vorrichtung mit einem Dämpfer, der ein Durchführen oder Durchrutschen des Kupplungselementes zwischen den beiden Elementen der Kupplungsvorrichtung auslöst. Der Dämpfer ist vorzugsweise im Bereich der beiden seitlichen Umkehrpunkte der Wegstrecke der Lichtquelle vorgesehen.

Dabei ist es weiter bevorzugt, wenn die verfahrbare Abstreifeinrichtung und die Lichtquelle, insbesondere die Lichtquelle der Baueinheit 0, eine verfahrbare Baueinheit 0# mit Rutschkupplung, insbesondere Sperrkörperkupplung, bilden.

Nach weiteren bevorzugten Alternativen ist dem Behälter der Vorrichtung eine Zuführeinrichtung zum Zuführen des flüssigen, lichthärtenden Kunststoffes zugeordnet, insbesondere ist die Zuführeinrichtung unterhalb der Oberfläche des Bades dem Behälter zugeordnet, wobei die Zuführeinrichtung eine Austrittsöffnung im Behälter und eine Leitung umfasst, wobei die Leitung mit einer Pumpe verbunden ist. Ferner ist dem Behälter mindestens ein Auffangbehälter zugeordnet, insbesondere sind dem Behälter zwei gegenüberliegende Auffangbehälter seitlich des Behälters, insbesondere seitlich entlang der Längs- oder Querachse des Behälters, zugeordnet. In den mindestens einen Auffangbehälter ist der flüssige, lichthärtende Kunststoff, vorzugsweise der überstehende Kunstsoff mit einer gewölbten Oberfläche, mittels einer entlang einer Achse des Behälters verfahrbaren Abstreifeinrichtung, vorzugsweise in eine planare Oberfläche, überführbar. Die verfahrbare Abstreifeinrichtung umfasst vorzugsweise einen Rakel, der eine planare Unterseite aufweist. Der Rakel kann eine Gummilippe aufweisen.

Die erfindungsgemäße Vorrichtung ist derart konzipiert, dass sie erstmals die Oberflächenspannung des lichthärenden Kunststoffes bzw. einer polymerisierbaren Zusammensetzung nutzt, um den härtbaren Kunststoff oberhalb der letzten gehärteten Schicht oder oberhalb der Bauplattform im Überschuss vorzusehen. Erst anschließend wird eine Abstreifeinrichtung, die in einem definierten Abstand zur Oberkante des Behälters bspw. mit einem Höhenunterschied von 0,1 mm fest ausgerichtet ist, zur Einstellung der planaren Kunststoffoberfläche eingesetzt.

Dabei ist es besonders bevorzugt, wenn in der Vorrichtung der flüssige, lichthärtende Kunststoff, insbesondere der in der Höhe oberhalb der Wände des Behälters überstehende Kunstsoff, der aufgrund der Oberflächenspannung des Kunststoffes eine gewölbte Oberfläche aufweist, mittels einer entlang einer Achse des Behälters, insbesondere Längs- oder Querachse, wie Längsmittelachse, verfahrbaren Abstreifeinrichtung in mindestens einen Auffangbehälter überführbar ist, wobei sich insbesondere eine Oberfläche, vorzugsweise eine planare Oberfläche, als Projektionsfläche ausbildet. Die Abstreifeinrichtung erstreckt sich im Wesentlichen quer über den offenen Bereich des Behälters. Die Abstreifvorrichtung wird erfindungsgemäß mittelbar über den Antrieb, Vortrieb und/oder Vorschub der Lichtquelle, der Baueinheit oder der Gesamtbaueinheit entlang einer Achse des Behälters, insbesondere in einer horizontalen Ebene, geführt. Somit benötigt die erfindungsgemäße Abstreifeinrichtung selbst keinen eigenen elektronischen Antrieb bzw. Motor. Erfindungsgemäße ist der Lichtquelle, Baueinheit und/oder Gesamtbaueinheit ein elektronischer Motor für den Antrieb, Vortrieb oder Vorschub zugeordnet, um über den Behälter bewegt zu werden. Mit der erfindungsgemäßen Vorrichtung ist es möglich die Abstreifeinrichtung simultan mittels einer Kupplungseinrichtung und eines Kupplungselementes zusammen mit dem Belichtungsfeld aber vor dem Belichtungsfeld entlang einer Achse des Behälters zu bewegen.

Durch die erfindungsgemäße Kombination des Kupplungsmechanismus und der Niveauregulierung konnte ein besonders wirtschaftliches scrollendes Rapid-Prototyping-Verfahren und eine Vorrichtung zur Durchführung des Verfahrens bereitgestellt werden.

Ferner ist Gegenstand der Erfindung eine Vorrichtung umfassend eine Baueinheit (0), die eine Anordnung umfasst, wobei die Anordnung eine Lichtquelle, insbesondere flächig abstrahlende Lichtquelle, einen Flächenlichtmodulator und eine Optik umfasst. Dabei bildet ein Linsensystem vorzugsweise die Optik. Die Lichtquelle kann ein UV-Laser oder ein Beamer, wie ein UV-LED-Beamer sein.

Nach einer weiteren Ausführungsform ist Gegenstand der Erfindung eine Vorrichtung mit einer Zuführeinrichtung, die unterhalb der Oberfläche des Bades dem Behälter zugeordnet ist, insbesondere weist die Zuführeinrichtung eine Austrittsöffnung im Behälter auf und umfasst eine Leitung, die die Austrittsöffnung und eine Pumpe verbindet. Die Austrittsöffnung liegt vorzugsweise unterhalb der Oberfläche des Bades.

In einer bevorzugten Ausführungsform kann mit einer Vorrichtung der flüssige, lichthärtende Kunststoff aus dem Auffangbehälter mittels einer Saugleitung, insbesondere durch einen Filter, mittels einer Pumpe, vorzugsweise einer Schlauchpumpe, Membranpumpe, über die Zuführeinrichtung erneut dem Bad zugeführt werden. Dabei ist besonders auf eine blasenfreie Zuführung zu achten.

Entsprechend einer besonders bevorzugten Ausführungsform der Erfindung umfasst die Vorrichtung eine Baueinheit 0# - gesamte Baueinheit - umfassend eine entlang einer Achse (x,y-Ebene) des Behälters verfahrbare Abstreifeinrichtung und eine kleinere Baueinheit, wobei sich die Abstreifeinrichtung vor dem Belichtungsfeld oder vor der Lichtquelle der Baueinheit 0 befindet. Die Abstreifeinrichtung ist in einem definierten Abstand vor dem Belichtungsfeld oder vor der Lichtquelle angebracht, insbesondere 20 bis 150 mm, bevorzugt 20 bis 80 mm. Vorzugsweise bilden die verfahrbare Abstreifeinrichtung und die Lichtquelle der Baueinheit 0 eine koppelbare, verfahrbare Gesamtbaueinheit 0#. Entsprechend einer bevorzugten Ausführungsform weist die Abstreifeinrichtung eine Kupplungsvorrichtung auf und wird mittels eines Schwertes, das der Lichtquelle oder der Baueinheit 0 zugeordnet ist, vor der Lichtquelle bzw. vor dem Belichtungsfeld hergeschoben. Das Schwert kann vorzugsweise im Bereich der Umkehrpunkte der Baueinheit am Behälter an dem vorderen und hinteren Ende des Behälters durch eine Kupplungsvorrichtung hindurchgeführt werden, um auf diese Weise beim erneuten Verfahren der Baueinheit 0# entlang des Rückweges über den Behälter die Abstreifeinrichtung wieder vor der Lichtquelle oder vor dem Belichtungsfeld zu positionieren. Indem ein Schwert der Lichtquelle oder der Baueinheit 0 zugeordnet ist und an den Endpunkten (Umkehrpunkte der Baueinheit 0# im Behälter) durch die Kupplungsvorrichtung des Abstreifers hindurchgeführt wird, kann das Kupplungselement, insbesondere das Schwert, bei einem Richtungswechsel der Baueinheit die Kupplungsvorrichtung und damit die Abstreifeinrichtung vor der Lichtquelle und/oder dem Belichtungsfeld herschieben.

Vorzugsweise ist die Kupplungsvorrichtung eine Vorrichtung umfassend zwei Elemente, insbesondere etwa trapezförmige Elemente, vorzugsweise symmetrische mindestens ein Trapez enthaltende Elemente, die mit Federn aneinander gedrückt werden können. Die Elemente sind vorzugsweise derart gebildet und zueinander ausgerichtet, dass sich zwischen ihnen in horizontaler Ebene eine Kerbe ausbildet. Das Schwert kann durch ein Auseinanderdrücken der beiden gefedert gelagerten Elemente die Ebene zu einem Spalt aufweiten. Durch diesen Spalt kann das Schwert im Bereich des Umkehrpunktes geschwenkt werden, um erneut beim Rückführen der Baueinheit 0# die Kupplungsvorrichtung vor dem Kupplungselement, wie bspw. dem Schwert, über die Oberfläche des Kunststoffes führen zu können. An den Umkehrpunkten ist ein Dämpfer positioniert, der das Rakel (Wischer, Schieber) anhält und solange Druck aufbaut, bis sich das Schwert durch die vorgenannte Kerbe der Kupplungsvorrichtung und den sich bildenden Spalt schiebt. Sobald das Schwert auf der gegenüberliegenden Seite der Kupplungsvorrichtung angeordnet ist, kann die Baueinheit 0 den Rakel erneut in der entgegengesetzten Richtung über den Behälter schieben.

Die Unterkante(n) der Abstreifeinrichtung wird in einem definierten Abstand zu den planaren Oberkanten der seitlichen Wände des Behälters eingestellt, vorzugsweise kann beispielsweise ein Abstand von 0,1 mm voreingestellt werden. Alternativ kann die Abstreifeinrichtung über die planaren Oberkanten der seitlichen Wände des Behälters geführt werden.

Die Baueinheit 0 - kleine Baueinheit - umfasst eine Anordnung umfassend eine flächig abstrahlende Lichtquelle, einen Flächenlichtmodulator sowie die Optik, die vorzugsweise ein Linsensystem ist. Die Lichtquelle kann ein UV-Laser oder einen Beamer umfassen. Der Beamer kann beispielsweise ein Beamer mit DLP (Digital Light Processor) Technologie der Fa. Visitech AS sein. Bevorzugt ist ein Mikrospiegelreaktor bei der DLP-Technik. Die optische Leistung der UV-Lichtquelle liegt vorzugsweise im Bereich von 0,5 bis 100 Watt. Bevorzugte Wellenlängen sind 340 nm bis 500 nm.

Entsprechend einer besonders bevorzugten Ausführungsform der Erfindung wird die Abstreifeinrichtung simultan zusammen mit der Lichtquelle vor dem Belichtungsfeld der Lichtquelle, entlang einer Achse des Behälters (x, y- Ebene) geführt, um die zu polymerisierende Schicht (x1,y1) des Kunststoffs als Projektionsfläche zu bilden, auf der das Belichtungsfeld abgebildet wird und der Kunststoff durch die Belichtung im Belichtungsfeld polymerisiert. Unter simultan im Sinne der Erfindung wird ein gleichzeitiges Führen der Abstreifeinrichtung und der Lichtquelle entlang einer Achse des Behälters verstanden. Schritt a), die Niveau-Regulierung des Bades und Erzeugung der der gewölbten Oberfläche, erfolgt erfindungsgemäß vorzugsweise im Umkehrpunkt des Belichtungsprozesses bzw. im Verfahrensschritt in dem die Baueinheit ihren Umkehrpunkt aufweist. Dabei kann es bevorzugt sein, wenn die Lichtquelle mittels eines Motors, insbesondere eines elektrischen Motors, angetrieben wird.

Ebenso Gegenstand der Erfindung ist ein Verfahren zum Herstellen eines dreidimensionalen Objektes mit der erfindungsgemäßen Vorrichtung, insbesondere von zumindest einem Teil eines dentalen prothetischen Teils, sowie prothetische Teile erhältlich nach diesem Verfahren, in dem das dreidimensionale Objekt, wie ein dentales prothetisches Teil, schichtweise erzeugt wird, indem jeweils eine Schicht (x1,y1) als Projektionsfläche eines flüssigen, lichthärtenden Kunststoffes hergestellt wird, und in einem Belichtungsfeld zumindest teilweise mittels Licht einer Lichtquelle, vorzugsweise einer flächig abstrahlenden Lichtquelle, polymerisiert wird, wobei
a) eine Schicht (x1,y1) des flüssigen, lichthärtenden Kunststoffes auf einer Bauplattform oder einer polymerisierten Schicht erzeugt wird, indem in einem Bad des flüssigen, lichthärtenden Kunststoffs eine Abstreifeinrichtung, die an eine Lichtquelle koppelbar ist, vor dem Belichtungsfeld und/oder vor der Lichtquelle hergeführt wird, und
   i) eine zu polymerisierende Schicht (x1, y1) als Projektionsfläche erhalten wird, und
   ii) die in i) erzeugte zu polymerisierende Schicht (x1,y1) als Projektionsfläche des flüssigen, lichthärtenden Kunststoffes mit einem Belichtungsfeld mittels Licht der Lichtquelle im Schritt a) polymerisiert wird, (insbesondere werden i) und ii) simultan durchgeführt, und
b)
   i) im Bereich eines Umkehrpunktes der Wegstrecke der Abstreifeinrichtung oder der Lichtquelle, insbesondere einer flächig abstrahlenden Lichtquelle, wird die Abstreifeinrichtung so an die Lichtquelle gekoppelt, dass die Lichtquelle erneut die Abstreifeinrichtung vor sich herführt, und optional
   ii) wird im Schritt b) die Bauplattform um eine Schichtdicke (z1) abgesenkt und optional eine Schicht (x,y) des flüssigen, lichthärtenden Kunststoffes über der zuvor polymerisierten Schicht (x1,y1) erzeugt, und optional
c) mindestens ein bis mehrmaliges Wiederholen der Schritte a) und b), wobei die Abstreifeinrichtung eine Kupplungsvorrichtung aufweist und der Lichtquelle oder der Baueinheit ein Kupplungselement zugeordnet ist, mit dem die Abstreifeinrichtung vor der Lichtquelle und/oder dem Belichtungsfeld hergeschoben wird.

Entsprechend einer Alternative kann die Schicht (x1,y1) wie folgt hergestellt werden, in dem a) eine Schicht (x,y) des flüssigen, lichthärtenden Kunststoffes auf einer Bauplattform oder einer polymerisierten Schicht erzeugt wird, indem in einem Bad des flüssigen, lichthärtenden Kunststoffs die Menge des Kunststoffes so eingestellt wird, dass der Kunststoff an der Oberkante der Wände des Behälters in der Höhe durch die Oberflächenspannung des Kunststoffes übersteht und sich eine gewölbte Oberfläche ausbildet, und optional fließt der Kunststoff in den mindestens einen seitlich des Behälters angeordneten Auffangbehälter, nachfolgend wird der überstehende, flüssige, lichthärtende Kunststoff der gewölbten Oberfläche mittels einer entlang einer Achse des Behälters verfahrbaren Abstreifeinrichtung, insbesondere mit Kupplungsvorrichtung, entfernt, und es wird eine zu polymerisierende Schicht (x1, y1) als Projektionsfläche erhalten und optional wird die erzeugte zu polymerisierende Schicht (x1,y1) als Projektionsfläche des flüssigen, lichthärtenden Kunststoffes mit einem Belichtungsfeld mittels Licht einer Lichtquelle polymerisiert, und optional b) wird die Bauplattform um eine Schichtdicke (z1) abgesenkt und optional c) mindestens ein bis mehrmaliges Wiederholen der Schritte a) bis b). Die Bauplattform dient der Justierung der z-Achse für den schichtweisen Aufbau der Objekte.

Das Verfahren kann statisch durchgeführt werden. Bei einem statischen Verfahren wird der verfahrbare Abstreifer entlang einer Achse des Behälters verfahren. Die Belichtung erfolgt mittels einer statischen Lichtquelle. Entsprechend einer besonders bevorzugten Alternative der Erfindung ist die Lichtquelle jedoch entlang einer Achse des Behälters verfahrbar und zudem vorzugsweise mit dem Abstreifer koppelbar, insbesondere mechanisch oder magnetisch koppelbar ist. Entsprechend einer besonders bevorzugten Ausführungsvariante werden die Schritte b) und c) simultan durchgeführt. Die simultane Durchführung des Ausbildens der planaren Oberfläche als Projektionsfläche und die unmittelbar anschließende Belichtung kann erfolgen, indem erfindungsgemäß eine verfahrbare Abstreifeinrichtung und die Lichtquelle eine koppelbare, insbesondere mechanisch oder magnetisch koppelbare, verfahrbare gesamte Baueinheit 0# bilden, d.h. die Abstreifeinrichtung und die Lichtquelle oder die Baueinheit 0 - kleine Baueinheit - sind aneinander- und entkoppelbar und bilden die gesamte Baueinheit oder Gesamtbaueinheit 0#.

Ferner ist Gegenstand der Erfindung ein Verfahren in dem die Baueinheit 0# - Gesamtbaueinheit - eine verfahrbare Abstreifeinrichtung und eine Baueinheit 0 - kleine Baueinheit - aufweist, wobei die Baueinheit 0 eine Anordnung umfassend eine flächig abstrahlende Lichtquelle, einen Flächenlichtmodulator und die Optik aufweist, insbesondere bildet ein Linsensystem die Optik.

Ein weiterer Vorteil des erfindungsgemäßen Verfahrens besteht darin, dass der flüssige, lichthärtende Kunststoff aus dem Auffangbehälter erneut dem Bad zugeführt werden kann. Erfindungsgemäß ist es bevorzugt, wenn die Vorrichtung vor elektromagnetischer Strahlung geschützt wird oder in einem Dunkelraum steht.

Weiter ist es bevorzugt, wenn das Verfahren mit den Schritten durchgeführt wird, indem Schritt b) ii) zeitgleich mit Schritt b) i) durchgeführt wird. Weiter ist es bevorzugt, wenn das Verfahren mit den Schritten durchgeführt wird, indem Schritt b) ii) durchgeführt wird, nachdem der Schritt b) i) durchgeführt wurden, oder Schritt b) ii) durchgeführt wird nachdem die verfahrbare Abstreifeinrichtung, die Lichtquelle oder die Baueinheit 0# über das Belichtungsfeld geführt wurden und sich außerhalb des Belichtungsfeldes befinden, insbesondere nach Durchführen des Schrittes a) i) und ii), oder nachdem die verfahrbare Abstreifeinrichtung, die Lichtquelle oder die Baueinheit 0# sich an einem vorderen oder hinteren Ende des Behälters, insbesondere im Bereich des Umkehrpunktes, befinden. Als vorne und hinten gelten die Bereiche der seitlichen Wände des Behälters in denen der Abstreifer und die Lichtquelle ihre Umkehrpunkte haben. Erfindungsgemäß ist es bevorzugt, dass die Regelung des Niveaus des Füllstands, wie in Schritt a) in den Umkehrpunkten des Belichtungsprozesses erfolgt.

Nach einer bevorzugten Ausführungsvariante können die Oberkanten der Wände des Behälters und die Unterkante(n) der Abstreifeinrichtung in der Ebene der Projektionsfläche liegen.

Weiter ist es bevorzugt, wenn die Baueinheit zur Homogenisierung der Lichtmengenverteilung einen Flächenlichtmodulator aufweist, der eine Vielzahl von in Reihen und Spalten angeordneten ansteuerbaren kippbaren Mikrospiegeln aufweist, bei dem das Licht einer flächig abstrahlenden Lichtquelle über eine Optik abgebildet wird und ein Belichtungsfeld der abgebildeten Lichtquelle über eine Projektionsfläche geführt wird. Die Projektionsfläche stellt vorzugsweise die Schicht (x1, y1) dar, wobei eine zur Mitte des Belichtungsfeldes hin zunehmende Anzahl von Pixeln nicht belichtet wird, so dass im zeitlichen Integral eine Homogenisierung der Lichtintensität aller auf der Projektionsfläche belichteten Pixel erreicht wird.

Gleichfalls ist Gegenstand der Erfindung ein Verfahren in dem die Gesamtbaueinheit 0# oder die Baueinheit 0 und damit das Belichtungsfeld und die Abstreifeinrichtung simultan periodisch über die Projektionsfläche geführt werden, wobei vorzugsweise als Projektionsfläche die Oberfläche eines flüssigen lichthärtenden Kunststoffs verwendet wird, insbesondere die Schicht (x1,y1).

Entsprechend einem weiteren Gegenstand der Erfindung wird ein Rapid-Prototyping-Verfahren beansprucht, in dem ein flüssiger lichthärtender Kunststoff nach einem vorstehend beschriebenen Verfahren belichtet wird, vorzugsweise mit UV-Licht belichtet wird, wobei die Abstreifeinrichtung simultan zusammen mit dem Belichtungsfeld, insbesondere mit der Lichtquelle, der Baueinheit oder der Gesamtbaueinheit, und vor dem Belichtungsfeld entlang einer Achse (x, y-Ebene) des Behälters geführt wird, insbesondere über den Behälter geführt wird, um die zu polymerisierende Schicht (x1,y1) des Kunststoffs als Projektionsfläche zu bilden, auf der das Belichtungsfeld abgebildet wird und der Kunststoff durch die Belichtung im Belichtungsfeld polymerisiert.

Nach dem Belichtungsprozess wird das erhaltene 3D-Objekt in einem alkoholischen Bad gereinigt, vorzugsweise wird Isopropanol verwendet und in einem Ultraschallbad zwischen 30 bis 60 °C nicht polymerisiertes Monomer entfernt. Anschließend wird das Objekt in einem Licht-Ofen nachvergütet. Im Licht-Ofen wird mit einer Wellenlänge zwischen 300 bis 500 nm belichtet und optional bei 20 bis 90 °C thermisch behandelt. Ebenso Gegenstand der Erfindung ist die Verwendung einer erfindungsgemäßen Vorrichtung zur Herstellung von zumindest Teilen dentaler prothetischer Versorgungen.

Ebenso kann das Verfahren modifiziert werden, indem zur Herstellung einer homogenisierten Lichtmengenverteilung ein Flächenlichtmodulator verwendet wird, der eine Vielzahl von in Reihen und Spalten angeordneten ansteuerbaren kippbaren Mikrospiegeln aufweist, bei dem das Licht einer flächig abstrahlenden Lichtquelle über eine Optik abgebildet wird und ein Belichtungsfeld der abgebildeten Lichtquelle mit dem Flächenlichtmodulator über eine Projektionsfläche geführt wird, wobei eine zur Mitte des Belichtungsfelds hin zunehmende Anzahl von Pixeln nicht belichtet wird, so dass im zeitlichen Integral eine Homogenisierung der Lichtintensität aller auf der Projektionsfläche belichteten Pixel erreicht wird.

Als Pixel wird im Rahmen der vorliegenden Erfindung eine kleinste anzusteuernde Lichtquelle verstanden, aus denen das Bild des Beamers zusammengesetzt ist.

Als Flächenlichtmodulatoren können beispielsweise die besonders gut geeigneten DLP^{®} Chips der Firma Texas Instruments oder Visitech eingesetzt werden.

Erfindungsgemäß kann vorgesehen sein, dass als flächig abstrahlende Lichtquelle ein Beamer, bevorzugt ein LED-Beamer, besonders bevorzugt ein UV-LED-Beamer, verwendet wird. Alternativ kann ein Lasersystem verwendet werden.

Sowohl der Beamer als auch das Lasersystem strahlen vorzugsweise Licht einer Wellenlänge ausgewählt von 180 bis 600 nm ab, vorzugsweise von 230 bis 500 nm, besonders bevorzugt sind 340 bis 500 nm. Generell können polychromatische Lichtquellen als Beamer verwendet werden, wobei jedoch monochromatische Lichtquellen oder auch im Wesentlichen monochromatische Lichtquellen besonders bevorzugt sind. Durch Verwendung von monochromatischen Lichtquellen kann die Lichtintensität bzw. Strahlungsintensität vereinheitlicht und damit eine homogenere Polymerisation erzielt werden. Besonders bevorzugt sind LED-UV-Beamer mit einer Wellenlänge um 385 nm oder Lasersysteme mit einem Laser mit einer Wellenlänge um 285 nm. Bevorzugt sind Beamer mit einer Auflösung von größer gleich 1024x800, bevorzugt größer gleich 1920x1080 Pixel, insbesondere hochauflösenden mit bis zu 100.000 oder mehr Pixeln. Besonders bevorzugt werden flächig abstrahlende Lichtquellen mit kohärenten Lichtstrahlen verwendet. Eine räumliche Kohärenz wird auch durch einen sehr geringen Abstand der Lichtquelle 1 und/oder der Baueinheit 0 vom Belichtungsfeld 5 erzielt.

Als geringer Abstand der flächigen Lichtquelle, Anordnung und/oder der Baueinheit vom Belichtungsfeld gelten 3 mm bis 500 mm, insbesondere 3 mm bis 250 mm, besonders bevorzugt 3 mm bis 150 mm, vorzugsweise 3 mm bis 50 mm alternativ kann der Abstand auch 1 mm bis 50 mm betragen. Erfindungsgemäß bilden die flächig abstrahlende Lichtquelle, der Flächenlichtmodulator und die Optik, insbesondere ein Linsensystem, eine Anordnung. Die flächig abstrahlende Lichtquelle, der Flächenlichtmodulator und die Optik, insbesondere ein Linsensystem, liegen zudem als Anordnung in einer Baueinheit vor.

Dabei kann vorgesehen sein, dass durch eine für die Ansteuerung des Beamers hinterlegte Maske, insbesondere eine programmierbare Maske, die nicht belichteten Pixel definiert werden, indem bestimmte Leuchtpunkte des Beamers immer ausgeschaltet bleiben. Eine Maske nach der Erfindung entspricht einem Motiv der ausgeschalteten Leuchtpunkte der Lichtquelle, wobei sich das Motiv im Belichtungsfeld als nicht belichtete Pixel darstellt, insbesondere als statisches Motiv nicht belichteter Pixel.

Durch die hinterlegte Maske wird auf einfachste Weise erreicht, dass die Lichtintensität in bestimmten Bereichen des Belichtungsfelds reduziert wird. Mit dieser Maske kann dann eine Homogenisierung des Belichtungsfelds, insbesondere eine Homogenisierung der Lichtintensität des Belichtungsfelds, besonders bevorzugt eine Homogenisierung im zeitlichen Integral der Lichtintensität des Belichtungsfelds, erreicht werden.

Alternativ zur Verwendung einer hinterlegten Maske kann auch vorgesehen sein, dass durch eine Schwärzung der Mikrospiegel oder durch einen Flächenlichtmodulator mit Lücken in der Besetzung mit Mikrospiegeln oder durch Umlenken der Leuchtpunkte durch die Mikrospiegel die nicht belichteten Pixel definiert werden.

Durch ein Weglassen einzelner Mikrospiegel können die Kosten für den Flächenlichtmodulator beziehungsweise die Anzahl der notwendigen Anschlüsse reduziert werden. Bei Verwendung einer Schwärzung kann auf handelsübliche vollflächig besetzte Flächenlichtmodulatoren zurückgegriffen werden.

Mit einer Weiterbildung des erfindungsgemäßen Verfahrens kann auch vorgesehen sein, dass die Anzahl der nicht belichteten Pixel zur Mitte hin nach Maßgabe einer Funktion zunimmt, vorzugsweise linear oder nach Maßgabe einer Parabel, besonders bevorzugt nach einer Funktion, die die auftretenden Interferenzen berücksichtigt, vorzugweise nach einer Funktion die die Kohärenz am Belichtungsfeld, vorzugsweise des zu belichtenden bzw. zu druckenden Motivs verbessert.

Hierdurch sind die aufgrund der Optik typischerweise auftretenden Abweichungen in der Intensität des Belichtungsfelds besonders gut auszugleichen. Eine solche Funktion kompensiert die Intensitätszunahme in der Mitte des Belichtungsfelds besonders gut.

Dabei kann vorgesehen sein, dass die Funktion in Abhängigkeit von der durch die Optik, insbesondere ein Linsensystem, verursachten Inhomogenität des Belichtungsfelds bestimmt wird, vorzugsweise berechnet wird.

Bevorzugt wird die Funktion in Abhängigkeit von der durch die flächige Lichtquelle, die Anordnung umfassend die flächige Lichtquelle, den Flächenlichtmodulator und/oder die Optik verursachten Inhomogenität des Belichtungsfelds bestimmt, vorzugsweise berechnet. Alternativ wird die Funktion in Abhängigkeit von der durch die Baueinheit, umfassend die Lichtquelle, verursachte Inhomogenität berechnet.

Die Funktion, nach der die Anzahl der nicht belichteten Pixel zur Mitte des Belichtungsfelds zunimmt, wird ermittelt als Funktion einer Referenz 1, die die ursprüngliche Lichtintensität der Lichtquelle im Belichtungsfeld auf der Projektionsfläche (Ebene) angibt, und mit der Referenz 2, die die homogene, flächige Lichtintensität (Energiedichte in der Ebene, gemittelt über x-Pixel) der Projektionsfläche angibt, korreliert wird, insbesondere über 12x13 bis 1920x1080 Pixel. Die Projektionsfläche kann auch eine größere Auflösung an Pixel umfassen.

Auch diese Maßnahme dient dazu, einen möglichst genauen Ausgleich der baubedingten Fehler in der Intensitätsverteilung auszugleichen und damit ein möglichst homogenes Belichtungsfeld zu erzeugen.

Gemäß einer besonders bevorzugten Ausführungsform des erfindungsgemäßen Verfahrens kann auch vorgesehen sein, dass die Intensitätsverteilung des Belichtungsfelds bei maximaler Belichtung durch die Lichtquelle und den Flächenlichtmodulator gemessen oder berechnet wird und daraus die Anzahl der nicht belichteten Pixel in jeder Zeile und/oder Spalte ermittelt wird.

Hiermit wird ein besonders gut geeignetes Verfahren bereitgestellt, mit dem auch spezifische Intensitätsabweichungen bestimmter Lichtquellen, wie Beamer-Typen oder einzelner Beamer auf einfache Art ausgeglichen werden können.

Gemäß einer bevorzugten Ausführung der Erfindung kann vorgesehen sein, dass die flächig abstrahlende Lichtquelle, bevorzugt die Anordnung umfassend die flächig abstrahlende Lichtquelle, und/oder die Baueinheit umfassend eine flächig abstrahlende Lichtquelle über die Projektionsfläche geführt wird, um das Belichtungsfeld der abgebildeten Lichtquelle über die Projektionsfläche zu führen, wobei das Belichtungsfeld vor- und zurück über die Projektionsfläche geführt werden kann. Dies kann kontinuierlich oder diskontinuierlich erfolgen. Bevorzugt wird die Baueinheit periodisch über die Projektionsfläche geführt.

Hierdurch wird eine besonders leicht umzusetzende Methode bereitgestellt, um das Verfahren beim Rapid-Prototyping umzusetzen. Diese Methode ist weniger fehleranfällig als andere Methoden, insbesondere denen, in denen nur das Belichtungsfeld über die Projektionsfläche geführt wird.

Mit einer Weiterbildung des erfindungsgemäßen Verfahrens wird vorgeschlagen, dass das Belichtungsfeld periodisch über die Projektionsfläche geführt wird. Durch das periodische Überstreichen der Projektionsfläche wird eine gleichmäßigere Intensität entlang der Bewegungsrichtung des Belichtungsfelds erreicht.

Die belichtenden Motiveinzelbilder werden durch eine Überlagerung a) der extrahierten Motiveinzelbilder, d.h. abgeleitet aus dem zu druckenden Motiv dargestellt als einzelne Motive im Scrollvorgang bzw. Führen der Anordnung umfassend die Lichtquelle über die Projektionsfläche mit b) dem Motiv der ausgeschalteten Leuchtpunkte oder dem Motiv der Maske erhalten. Die Lichtintensität der belichtenden Motiveinzelbilder ist, im Vergleich zur Belichtung ohne Flächenlichtmodulator oder Maske, homogenisiert.

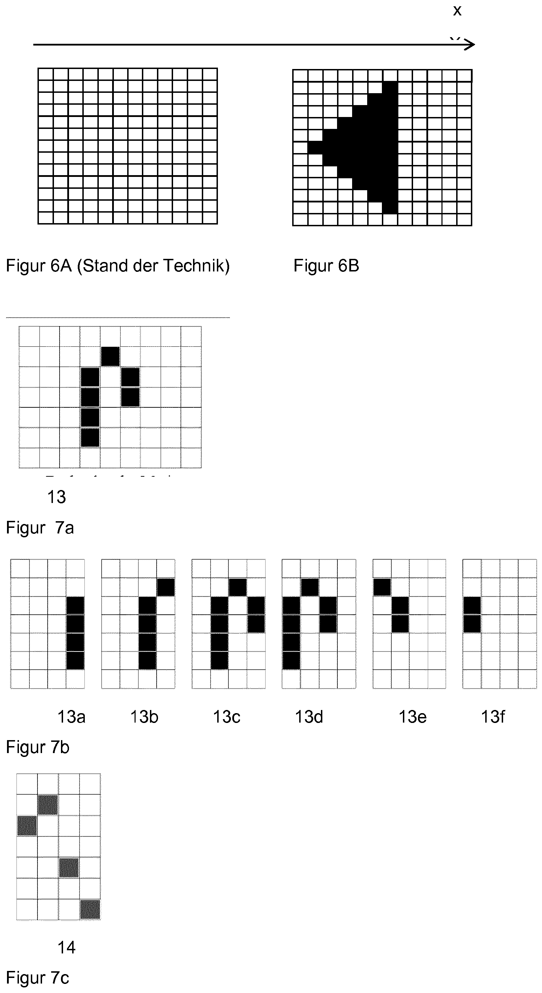

Nach einer besonders bevorzugten Ausführungsvariante werden in dem Verfahren im Belichtungsfeld belichtete Motiveinzelbilder erzeugt, indem eine Überlagerung a) von extrahierten Motiveinzelbildern mit b) dem Motiv der ausgeschalteten Leuchtpunkte erfolgt. Die extrahierten Motiveinzelbilder entsprechen dem zu druckenden Motiv, das in Motiveinzelbilder für den Scrollvorgang zerlegt wurde (Figur 7b).

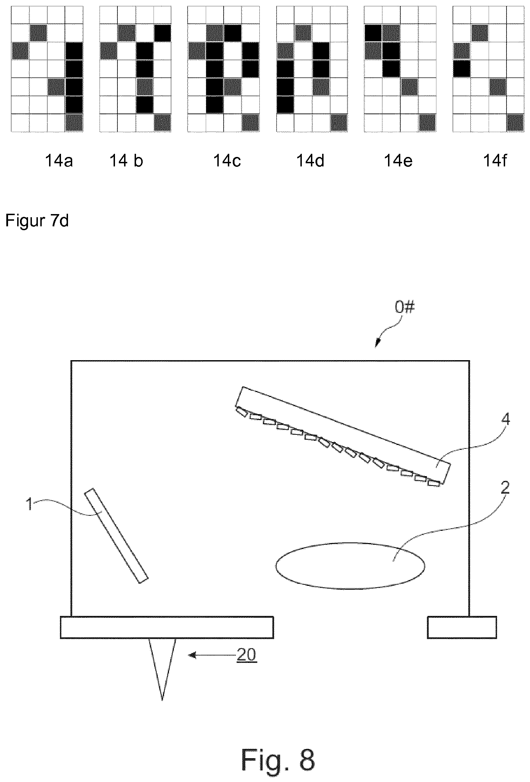

Das Motiv der ausgeschalteten Leuchtpunkte (Figur 7c) zeigt die nicht belichteten Pixel, das statische Motiv von nicht belichteten Pixeln. Die belichtenden Motiveinzelbilder (Figur 7d) werden erhalten durch eine Überlagerung der jeweiligen Motiveinzelbilder (extrahierte Motiveinzelbilder, Figur 7b) mit dem statischen Motiv der ausgeschalteten Leuchtpunkte, dargestellt als statisches Motiv mit nicht belichteten Pixeln.

Das zu druckende Motiv wird durch ein Führen des Belichtungsfeldes mit den belichteten Motiveinzelbildern über die Projektionsfläche erhalten.

Es kann auch vorgesehen sein, dass als Projektionsfläche die Oberfläche eines flüssigen lichthärtenden Kunststoffs verwendet wird. Insbesondere wird ein lichthärtendes dentales Material als lichthärtender Kunststoff verwendet. Erfindungsgemäß sind das Initiatorsystem des lichthärtenden Kunststoffes und die Wellenlänge der Lichtquelle optimal aufeinander abgestimmt.

Als ein lichthärtender Kunststoff gilt ein Harz oder vorzugsweise eine Mischung von lichthärtenden Monomeren umfassend optional Photoinitatoren oder ein Photoinitiatorsystem. Besonders bevorzugt werden dentale, lichthärtende Kunststoffe in dem erfindungsgemäßen Verfahren eingesetzt. Die dentalen, lichthärtenden Kunststoffe können ferner Füllstoff umfassen und umfassen in der Regel Alkyl(meth)acrylate. Bei der Verwendung eines flüssigen lichthärtenden Kunststoffs als Projektionsfläche ist das Verfahren zur Herstellung von dreidimensionalen Formkörpern (synonym Objekte) (als sogenanntes Rapid-Prototyping Verfahren) geeignet. Die der Erfindung zugrundeliegenden Aufgaben werden auch gelöst durch ein Rapid-Prototyping-Verfahren, bei dem ein flüssiger lichthärtender Kunststoff mit einem solchen Verfahren belichtet wird, vorzugsweise mit UV-Licht belichtet wird, wobei das Belichtungsfeld auf die Oberfläche des Kunststoffs abgebildet wird und der Kunststoff durch die Belichtung im Belichtungsfeld aushärtet.

Eine erfindungsgemäße Ausführungsform des Verfahrens zur Homogenisierung der Lichtintensität des Belichtungsfelds wirkt sich besonders bei Rapid-Prototyping-Verfahren aus, da dadurch die erzeugten Objekte bzw. Kunststoffkörper homogen aufgebaut werden können.

Einer Ausführungsform der Erfindung liegt die überraschende Erkenntnis zugrunde, dass es durch das Verwenden von toten beziehungsweise immer schwarzen Pixeln, das heißt nicht leuchtenden Pixeln, gelingt, eine Homogenisierung der UV-Lichtintensität zu erreichen, ohne dass hierzu Grauwerte mit der Flächenlichtquelle eingestellt werden müssten. Dabei kann eine einmal definierte Maske verwendet werden, welche in einem Beamer, bevorzugt in einem UV-Beamer hinterlegt ist. Die Anzahl der in den Zeilen beziehungsweise Spalten schwarz definierten Pixel, hier nicht leuchtenden Pixel, steigt dabei zur Mitte des Belichtungsfelds an, um die Intensitätsabschwächung des Belichtungsfelds zum Rand hin aufgrund der Optik auszugleichen. Dies ist notwendig, da die mittleren Zeilen (beziehungsweise Spalten) konstruktionsbedingt (aufgrund der Optik) heller belichtet sind.

Durch eine Ausführungsform des erfindungsgemäße Verfahren wird der folgende Effekt erzielt. Durch die Bewegung des Beamers beziehungsweise der vom Beamer ausgehenden Strahlung, wird bei einer Belichtung die komplette Zeile des Belichtungsfelds angesteuert. Dadurch wird beim Überfahren eine maximale Lichtmenge (UV-Lichtmenge) erzeugt. Bei einem Belichtungsfeld mit beispielsweise 1920x1080 Pixeln würde die maximale Lichtmenge mit 1080 Pixeln erzeugt werden. Werden weniger Pixel angesteuert, so wird die Leistung beziehungsweise die zeitlich integrierte Lichtintensität gemindert. Auf diese Weise wird erfindungsgemäß die ungleiche Ausleuchtung der Optik ausgeglichen.

Gleichfalls Gegenstand der Erfindung ist ein durch Computer lesbares Medium, auf dem ein Computerprogramm zur Verwendung einer erfindungsgemäßen Vorrichtung gespeichert ist, welches, wenn es durch einen Mikroprozessor ausgeführt wird, angepasst wird, um das erfindungsgemäße vorstehend erläuterte Verfahren zur Steuerung der Vorrichtung durchzuführen.

Ebenso Gegenstand der Erfindung ist ein Programmelement zur Steuerung der erfindungsgemäßen Vorrichtung, das, wenn es durch einen Mikroprozessor ausgeführt wird, angepasst wird, um das erfindungsgemäße vorstehende Verfahren durchzuführen. Im Folgenden werden Ausführungsbeispiele der Erfindung anhand von schematisch dargestellten Figuren erläutert, ohne jedoch dabei die Erfindung zu beschränken. Dabei zeigt:
- Figur 1:: Vorrichtung der Erfindung mit gewölbter Oberfläche 21a des polymerisierbaren Kunststoffes.
- Figur 2:: Vorrichtung der Erfindung mit planarer Oberfläche 21b des polymerisierbaren Kunststoffes.
- Figuren 3a, 3b und 4:: Kupplungsvorrichtung und Kupplungselement
- Figur 5:: einen schematischen Aufbau in Querschnittansicht zur Umsetzung eines erfindungsgemäßen Verfahrens; und
- Figur 6:: einen schematischen Vergleich eines voll belichteten UV-Beamer-Chips nach dem Stand der Technik (Figur 6A) im Vergleich zu einem erfindungsgemäß betriebenen UV-Beamer-Chip (Figur 6B).
- Figur 7a:: ein zu druckendes Motiv (13), wobei die Leuchtpunkte als schwarze Pixel dargestellt sind,
- Figur 7b:: die von der Lichtquelle (1) des Beamers einzeln dargestellten Bilder (extrahierte Motiveinzelbilder (13a, 13 b, 13c, 13d, 13e, 13f)) zur Erzeugung des zu druckenden Motivs (13) während der Bewegung der Lichtquelle über die Projektionsfläche (ohne Maske), wobei die Leuchtpunkte als schwarze Pixel dargestellt sind.
- Figur 7c:: ein Motiv der ausgeschalteten Leuchtpunkte (14), die über eine Maske erzeugt werden oder durch den Flächenlichtmodulator erzeugten ausgeschaltete Leuchtpunkte zum Angleichen von Belichtungsdifferenzen, wobei die ausgeschalteten Leuchtpunkte als graue Pixel dargestellt sind,
- Figur 7d:: eine Addition bzw. Überlagerung des Motivs der ausgeschalteten Leuchtpunkte (14), erzeugt durch den Flächenlichtmodulator und/oder die Maske und den extrahierten Motiveinzelbildern 13a bis 13f, wobei die Maske mit den ausgeschalteten Leuchtpunkten (14) als graue Pixel dargestellt sind und die Leuchtpunkte als schwarze Pixel dargestellt sind. Das aus grauen Pixeln dargestellte Motiv der ausgeschalteten Leuchtpunkte (14, Negativmotiv), ist statisch in allen Motiveinzelbildern als Überlagerung bzw. Subtraktion d.h. des Motivs der dauerhaft ausgeblendete oder geschaltete Leuchtpunkte (14) von den Motiveinzelbildern (13a bis 13f) des zu druckenden Motivs 13 abgezogen und als Überlagerung in den zu belichtenden Motiveinzelbildern (14a, 14b, 14c, 14d, 14e, 14f) dargestellt.
- Figur 8:: Gesamtbaueinheit (0#) umfassend eine Abstreifeinrichtung (20), die an die Baueinheit (0) an- und abkoppelbar ist.

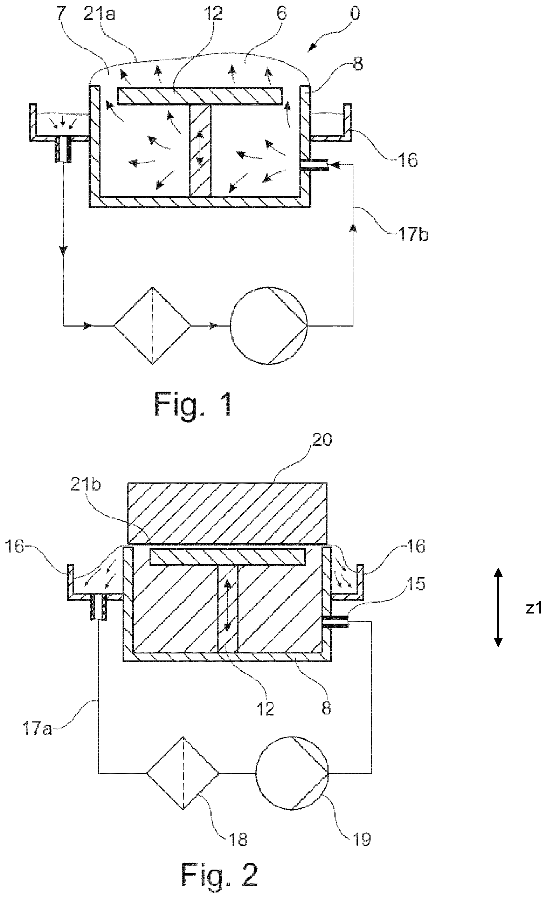

In einer Ausführungsform des erfindungsgemäßen "Belichtungs- und Verfahrensprozess im Stereolithographie Verfahren" erfolgt die Regelung des Niveaus des Füllstands in den Umkehrpunkten des Belichtungsprozesses. In der Zeitspanne, in der die Belichtungseinheit (Baueinheit 0, Gesamtbaueinheit 0#, Fig. 8) abgebremst und wieder angefahren wird, pumpt die Schlauchpumpe 19 (Fig. 1, 2) eine ausreichende Menge Harz (polymerisierbaren Kunststoff, Zusammensetzung umfassend Monomere) in den Behälter 8. Diese Menge muss so gewählt sein, dass eine ausreichende Menge an Harz über der Wand 8a des Behälters 8 aufgebaut wird. Es bildet sich die gewölbte Oberfläche 21a (Fig. 1). Durch die Oberflächenspannung des Harzes bzw. Kunststoffs, bleibt diese erhöhte Materialmenge erhalten, bis der Rakel (Abstreifeinrichtung 20) diese abstreift und die Oberfläche glättet. Die Schicht (x1,y1) mit der Projektionsfläche wurde gebildet (Fig. 2).

Anschließend verfährt die Belichtungseinheit (Baueinheit 0, 0#) und schiebt das Rakel über die Oberfläche und glättet durch Abstreifen des überschüssigen Materials die Oberfläche 21b. Das über die Wand 8a gelaufene Material (Fig. 2) wird im Auffangbehälter aufgefangen (Figur 2) und durch eine Absaugöffnung mit Saugleitung 17a wieder in den Pumpkreislauf (Figuren 1 und 2) geführt. Auf diese Weise wird ein immer gleichbleibendes Niveau während des Bauprozesses bzw. der Belichtungsphase gewährleistet.

Die Bauplattform 12 (Fig. 1 und 2) wird um eine Schichtdicke (z1) gesenkt und der Prozess startet erneut.

Die horizontalen Positionen des Behälters 8 und des Rakels 20 ändern sich während der Bauphase bzw. Verfahrens nicht. Diese Positionen werden einmal eingestellt und bleiben unverändert. Der Abstand in der Höhe zueinander wird mit einem definierten Wert (dieser liegt im ersten Test bei 0,1 mm) eingestellt und ausgerichtet. Der Abstand dient in erster Linie dazu, eine mechanische und schwingungsfreie Trennung der beiden Systeme (Beschichtungssystem (Baueinheit, Abstreifeinrichtung) = in Bewegung /Behältersystem = statisch) zu erhalten. Der Abstand sollte nicht größer sein als die Höhe, die von der Flüssigkeit mittels Oberflächenspannung erbracht werden kann. Bevorzugt ist der Abstand gleich oder etwas kleiner.

Der abgestreifte lichthärtende Kunststoff wird mittels einer Saugleitung 17a und einer Schlauchpumpe 19 (Fig. 1 oder 2) in den Kreislauf gesaugt und vorzugsweise gefiltert (Filter 18) und dem Behälter 8 (Wanne) erneut zugeführt. Das System ist dicht, um ein Eindringen von Luft in den Kreislauf zu vermeiden. Lufteinschlüsse stören den Polymerisations- bzw. Bauprozess und mindern die Qualität des Formkörpers/Objektes.

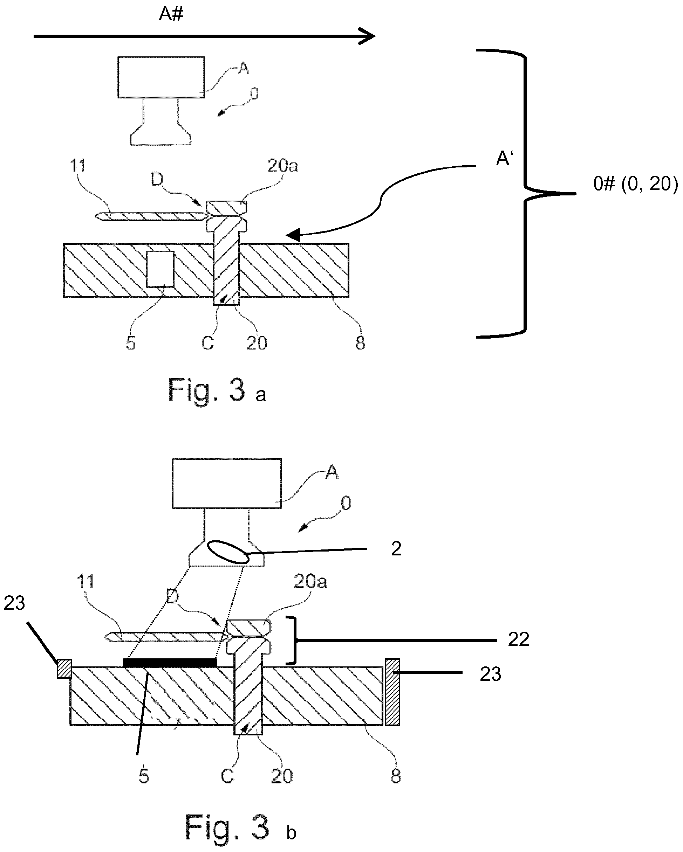

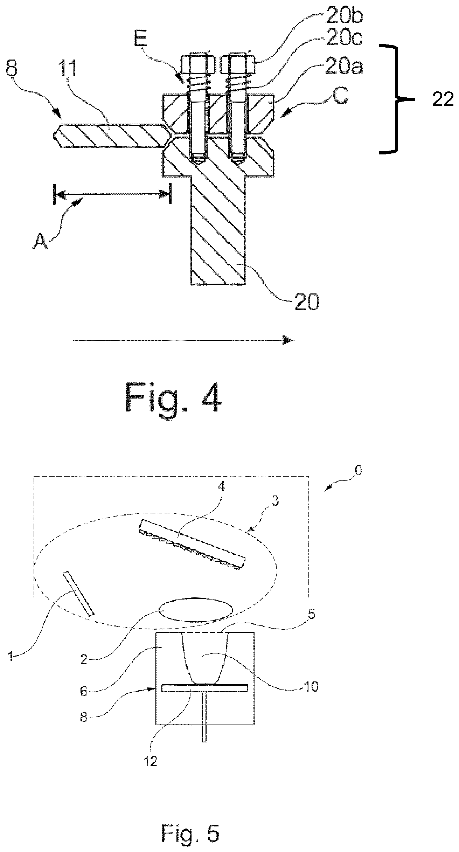

Die Fig. 3a (nicht perspektivisch, schematisch) und 4 stellen schematisch die Kupplungsvorrichtung 22 zwischen der Baueinheit 0 oder der Lichtquelle 1 und der Abstreifeinrichtung (Rakel) 20 dar. Gemäß Fig. 3a, 3b und 4 ist der Lichtquelle 1 oder der Baueinheit 0 ein Kupplungselement 11, wie ein Schwert, zugeordnet mit dem diese die Abstreifeinrichtung 20 mittels der Kupplungsvorrichtung 22 vor sich herschieben können. Die Abstreifeinrichtung ist vor dem Belichtungsfeld 5 der Lichtquelle 1 angeordnet und wird in dem Verfahren vor dem Belichtungsfeld 5 hergeschoben. Das Kupplungselement 11 kann seitlich des Behälters oder des Bades der Baueinheit zugeordnet sein, bspw. ist die Kupplungselement 11 über einen Arm (nicht dargestellt) mit der Baueinheit 0 verbunden. Daher ist das Kupplungselement 11 der Figuren 3a und b seitlich, hinter dem Behälter und nicht über dem Bad 7 angeordnet, so dass die Lichtquelle 1 (nicht dargestellt) in der Baueinheit ein Belichtungsfeld 5 auf dem Kunststoff 6 abbilden kann. Die Kupplungsvorrichtung 22 ist auf der Abstreifeinrichtung oben vorgesehen und umfasst mindestens ein Element 20a, das mit dem oberen Ende der Abstreifeinrichtung, das ebenfalls als Element 20a vorliegen kann mittels eines elastischem Elements, wie einer Federung 20c und einer Fixierung 20b, verbunden. Dem Schwert 11 kann nun im Bereich des Umkehrpunktes des Behälters ein Dämpfer 23 (Figur 3b) zugeordnet sein, der die Abstreifeinrichtung 20 abbremst. Das Schwert der Baueinheit 0 oder der Lichtquelle 1 wird sodann in die Kerbe A zwischen den beiden Elementen 20a geschoben. Ab einem bestimmten Druck schiebt das Schwert die beiden Elemente 20a auseinander und gleitet zwischen Ihnen hindurch. Die Elemente 20a werden durch die elastischen Elemente 20c wieder gegeneinander gedrückt. Beim anschließenden Richtungswechsel (Umkehrpunkt) schiebt das Schwert nun erneut die Abstreifeinrichtung vor sich über den Behälter. Wenn in dem erfindungsgemäßen Verfahren die Belichtungseinheit/Baueinheit 0, 0# mit UV-Beamer 1 (UV-LED-Beamer; in Baueinheit 0, 0#), insbesondere mit einem elektrischen Motor, symmetrisch zum Behälter 8 und in einem definierten Abstand über die Oberfläche 21a, 21b gefahren wird und das Belichtungsfeld 5, vorzugsweise horizontal, über die gebildete Projektionsfläche geführt wird, wird automatisch das Rakel 20 (Abstreifeinrichtung) zum Glätten der Oberfläche vor der Lichtquelle 1 oder/bzw. vor dem Belichtungsfeld 5 mitgeführt (Schleppverfahren oder Schleppverfahren). Das Rakel wird weder mechanisch noch elektrisch in dieser Ausführungsvariante verbunden, sondern berührt die Belichtungseinheit lediglich. Mit einem Abstand von 20 bis 150 mm wird das Rakel vor der Belichtungseinheit (Baueinheit 0) oder dem Belichtungsfeld 5 hergeschoben. Beim Start des Belichtungsprozesses fährt die Belichtungseinheit langsam an die Abstreifeinrichtung (Rakel) heran bis es die Einrichtung kontaktiert. Anschließend beschleunigt die Belichtungseinheit auf Prozessgeschwindigkeit und schiebt das Rakel vor sich her. Es folgt der Belichtungsschritt. Am gegenüberliegenden Ende des Behälters wird das Rakel durch einen Dämpfer gestoppt, wobei die Belichtungseinheit weiterfährt. Der Dämpfer baut solange einen Druck auf, bis das Schwert der Belichtungseinheit durch die Kupplungsvorrichtung des Rakels durchrutscht, indem die Federn 20c, die die Platten 20a mittels Stiftschrauben 20b nachgeben und das Schwert zwischen den Platten 20a durchgleitet. Nachdem die Belichtungseinheit diesen Umkehrpunkt durchlaufen hat, befindet sich das Rakel erneut an der gegenüberliegenden Seite der Belichtungseinheit vor dem Belichtungsfeld 5 und schiebt es nun entsprechend bis zum Startpunkt zurück. Auf diese Weise können zwei Schichten mit polymerisiert werden. Durch wiederholen dieser Zyklen werden die dreidimensionalen Objekte gebaut. Die Prozesszeit konnte durch die Kopplung der Abstreifeinrichtung mit der Lichtquelle oder der Baueinheit 0 und damit mit dem Belichtungsfeld erheblich vermindert werden. Die Fig. 3b zeigt das Belichtungsfeld 5 oben auf dem Kunststoff im Behälter 8. Das Belichtungsfeld 5 kann mittels einer Linse 2 auf die Projektionsfläche projiziert werden.

Fig. 5 zeigt eine schematische Querschnittansicht eines Aufbaus zur Umsetzung eines erfindungsgemäßen Verfahrens. Ein UV-LED-Beamer 1, der ultraviolettes Licht (UV-Licht) abstrahlt, wird auf einen Flächenlichtmodulator 4 abgestrahlt. Der UV-LED-Beamer 1 hat eine Auflösung von 1920x1080 Pixeln, die als rechteckige Fläche auf der Oberfläche eines Chips des UV-LED-Beamers 1 abstrahlen. Der Flächenlichtmodulator 4 umfasst eine Vielzahl von ansteuerbaren Mikrospiegeln, mit denen das Licht aus dem UV-LED-Beamer 1 reflektiert und mit Hilfe eines Linsensystems 2 auf die Oberfläche eines flüssigen lichthärtenden Kunststoffs 6 abgebildet wird. Die Mikrospiegel sind in Figur 1 als unterschiedlich orientierte kleine Rechtecke an einer Oberfläche des Flächenlichtmodulators 4 dargestellt. Der flüssige Kunststoff 6 ist in einem Behälter 8 angeordnet, der nach oben zum Flächenlichtmodulator 4 beziehungsweise dem Linsensystem 2 offen ist. Das Linsensystem 2, das in Figur 5 nur als einfache Linse schematisch dargestellt ist, bildet die Fläche der Pixel des UV-LED-Beamers 1 auf die Oberfläche des lichthärtenden Kunststoffs 6 ab. Mit Hilfe eines geeigneten Motors (nicht gezeigt) wird der UV-LED-Beamer 1 über den Behälter 8 gefahren und dadurch die Oberfläche des lichthärtenden Kunststoffs 6 mit dem Belichtungsfeld überstrichen, so dass jede Zeile des Chips des UV-LED-Beamers 1 jeden zu belichtenden Punkt vollständig überfährt beziehungsweise überfahren kann.

Das dadurch entstehende Belichtungsfeld auf der Oberfläche des lichthärtenden Kunststoffs 6 härtet die flüssigen Bestandteile aus, so dass ein fester Kunststoffkörper 10 entsteht. Der feste Kunststoffkörper 10 ist auf einer Halterung 12 gelagert, die langsam nach unten abgesenkt wird, so dass die obere Oberfläche des Kunststoffkörpers 10 von dem flüssigen lichthärtenden Kunststoff 6 benetzt wird und eine neue feste Schicht mit Hilfe des Belichtungsfelds auf dem Kunststoffkörper 10 erzeugt werden kann. Für Details zur Umsetzung sei auf die EP 1 880 830 A1 oder die EP 1 894 705 A2 verwiesen.

Eine Homogenisierung des Lichtfelds und damit des erzeugten Kunststoffkörpers 10 wird dadurch erreicht, dass die in der Mitte des Chips des UV-LED-Beamers 1 angeordneten Pixel nicht verwendet werden, das heißt, dass diese schwarz bleiben. Zum besseren Verständnis ist eine erfindungsgemäße Verwendung beziehungsweise eine erfindungsgemäße Steuerung eines solchen Chips in Figur 2B gezeigt und wird im Folgenden erläutert.

Fig. 6 zeigt einen schematischen Vergleich eines voll belichteten UV-Beamer-Chips (Figur 2A) nach dem Stand der Technik im Vergleich zu einem erfindungsgemäß betriebenen UV-Beamer-Chip (Fig. 6B). Der beispielhaft gezeigte UV-LED-Chip hat nur 12x13 Pixel, damit das Grundprinzip der vorliegenden Erfindung einfach veranschaulicht werden kann. In einer realen Ausführung kommen UV-LED-Beamer mit einer wesentlich höheren Auflösung zum Einsatz, wie beispielsweise 1920x1080 Pixel.

Jeder der UV-LED-Chips hat 12 Spalten und 13 Zeilen. Bei dem voll belichteten UV-LED-Chip nach dem Stand der Technik (Figur 6A) werden die inneren Bereiche des Belichtungsfelds mit einer höheren UV-Intensität bestrahlt, als die äußeren Bereiche. In der mittleren Spalte entsteht dadurch die höchste Intensität, die nach außen abnimmt. Aufgrund von Streueffekten und anderen durch die Optik auftretenden Eigenschaften, können die einzelnen Pixel des UV-LED-Beamers nicht beliebig scharf abgebildet werden. Jeder Pixel belichtet also auch die Bereiche des Belichtungsfelds, die eigentlich durch seine benachbarten Pixel belichtet werden müssten. Dadurch erhalten die durch die inneren Pixel bestrahlten Bereiche des Belichtungsfelds eine höhere Intensität als die durch die äußeren Pixel bestrahlten Bereiche des Belichtungsfelds.

Dies wird bezüglich der Spalten (In Fig. 6 von oben nach unten) dadurch ausgeglichen, dass der UV-LED-Beamer entlang einer Bewegungsrichtung X über das Belichtungsfeld gefahren wird. Die Bewegungsrichtung X des UV-LED-Beamers beziehungsweise des Belichtungsfelds ist in den beiden Fig. 6A und 6B durch den Pfeil angegeben. Das von den UV-LED-Chips abgestrahlte Bild wird also in Richtung der Zeilen (In Figur 6 von links nach rechts, das heißt entlang des Pfeils X) über das Belichtungsfeld bewegt. Zur Abbildung kann ein DLP^{®} Chip der Firma Texas Instruments eingesetzt werden.

Durch die in Fig. 6B gezeigten schwarzen Pixel, die ausgeschaltet bleiben oder die vom Flächenlichtmodulator nicht auf die Oberfläche des flüssigen lichthärtenden Kunststoffs reflektiert werden, wird die Lichtintensität in den verschiedenen Spalten des erfindungsgemäß betriebenen UV-LED-Beamers zur Mitte hin immer stärker reduziert. Dadurch wird erreicht, dass die mittleren Bereiche des entlang der Bewegungsrichtung X überstrichenen Belichtungsfelds die gleiche Intensität ultravioletter Strahlungsintensität erhalten, wie die äußeren Bereiche (Zeilen).

In einer Ausführungsform für ein erfindungsgemäßes Verfahren kann für den Beamer eine Maske hinterlegt werden, die definiert, welche der Pixel nicht eingeschaltet beziehungsweise benutzt werden und daher schwarz bleiben. Alternativ kann aber auch ein Flächenlichtmodulator verwendet werden, der im Bereich der Mitte weniger oder geschwärzte Spiegel aufweist.

In Figur 6B werden nur die äußersten beiden Zeilen mit allen zwölf Pixeln bestrahlt, während für jede Zeile, die dichter an der mittleren Zeile liegt, jeweils ein Pixel weniger leuchtet beziehungsweise abgebildet wird. In der mittleren Zeile sind dann nur noch sechs Pixel aktiv beziehungsweise es werden nur noch sechs Pixel abgebildet. Beim Überstreichen der Belichtungsfläche entlang der Bewegungsrichtung X wird eine mittlere Belichtungsintensität an den belichteten Stellen des Belichtungsfelds erzeugt, die unmittelbar proportional zur Anzahl der verwendeten beziehungsweise abgebildeten Pixel des UV-LED-Beamers ist. Geeignete Beamer können eine Auflösung von bis zu 100.000 oder bis zu 1,5 Millionen Pixel aufweisen. Ebenso können Beamer mit einer Darstellungen in XGA und Super-XGA (SXGA) mit 1.280 x 1.024 Bildpunkten eingesetzt werden.

Um eine gleichmäßig homogenisierte Lichtmengenverteilung auf der Oberfläche des lichthärtenden Kunststoffs beziehungsweise der Projektionsfläche zu erzielen, wird das Belichtungsfeld mit einer konstanten Geschwindigkeit über eine Bauplattform geführt. Die Bauplattform ist hier 1.920 x 20.000 Pixel groß (Pixelgröße hier 50x50 µm). Während der Bewegung werden Bildausschnitte über das Belichtungsfeld fortlaufend wiedergegeben.

Die einmal definierte Maske, welche im UV-Beamer hinterlegt ist, erzeugt in den einzelnen Zeilen tote (immer schwarze) Pixel. In diesem Fall steigt die Anzahl der in den Zeilen schwarz definierten Pixel zur Mitte hin an, da die mittleren Zeilen konstruktionsbedingt (durch Optik) heller belichtet sind.

Der Effekt ist folgender: Durch die Bewegung des UV-Beamers, wird bei einer Belichtung die komplette Zeile des Belichtungsfeldes angesteuert. So wird beim Überfahren eine maximale UV-Lichtmenge mit 1080 erzeugt. Werden weniger Pixel angesteuert, so wird die Leistung gemindert und es kann so die ungleiche Ausleuchtung der Optik ausgeglichen werden.

Fig. 7a zeigt ein zu druckendes Motiv 13, in dem die Leuchtpunkte als schwarze Pixel dargestellt sind. In Fig. 3b ist die Abfolge der von der Lichtquelle einzeln dargestellten Bilder (extrahierte Motiveinzelbilder 13a, 13 b, 13c, 13d, 13e, 13f) zur Erzeugung des zu druckenden Motivs 13 während der Bewegung der Lichtquelle oder der Anordnung über die Projektionsfläche (ohne Motiv der ausgeschalteten Leuchtpunkte und/oder ohne Maske) dargestellt. Die Leuchtpunkte sind als schwarze Pixel dargestellt. In Fig. 3c ist das Motiv der ausgeschalteten Leuchtpunkte 14 wiedergegeben. Das Motiv der ausgeschalteten Leuchtpunkte wird durch den Flächenlichtmodulator und/oder die Maske erzeugt. Die ausgeschalteten Leuchtpunkte sind als graue Pixel dargestellt. So können durch den Flächenlichtmodulator Leuchtpunkte ausgeschaltet oder umgelenkt werden, um ein Angleichen von Belichtungsdifferenzen zu erzielen.

In Fig. 7d ist die Überlagerung des Motivs der ausgeschalteten Leuchtpunkte 14, insbesondere des statischen Motivs, erzeugt durch den Flächenlichtmodulator und/oder die Maske und den extrahierten Motiveinzelbildern 13a bis 13f dargestellt. Das Motiv der ausgeschalteten Leuchtpunkte 14 oder die Maske sind als graue Pixel dargestellt. Die belichteten Pixel im Belichtungsfeld sind als schwarze Pixel dargestellt und bilden die zu belichtenden Motiveinzelbilder (14a, 14, b, 14c, 14d, 14e, 14f).

Figur 8 stellt dar die Gesamtbaueinheit 0# umfassend eine Abstreifeinrichtung 20, die an die Baueinheit 0 an- und abkoppelbar ist. Die Lichtquelle 1, oder mindestens das Belichtungsfeld 5 der Lichtquelle 1 wird zur Polymerisation des Kunststoffes 6 vor der Gesamtbaueinheit 0# oder der Baueinheit 0 hinter der Abstreifeinrichtung 20 hergeführt. Die Abstreifeinrichtung 20 ist, insbesondere über die Kupplungsvorrichtung 22, mit der Lichtquelle 1 oder dem Belichtungsfeld 5 der Lichtquelle 5 mechanisch koppelbar und wird vor der Lichtquelle 1 oder dem Belichtungsfeld 5 hergeführt.

Die in der voranstehenden Beschreibung, sowie den Ansprüchen, Figuren und Ausführungsbeispielen offenbarten Merkmale der Erfindung können sowohl einzeln, als auch in jeder beliebigen Kombination für die Verwirklichung der Erfindung in ihren verschiedenen Ausführungsformen wesentlich sein.

**Bezugszeichen:** 0 Baueinheit umfassend Lichtquelle (1) bzw. (A), wie UV-LED-Beamer (1) oder Lasersystem, Optik, insbesondere Linsensystem (2), Flächenlichtmodulator (4); 0# Gesamtbaueinheit bzw. Gesamte Baueinheit umfassend Abstreifeinrichtung 20 und Baueinheit 0 umfassend Lichtquelle 1, wie UV-LED-Beamer 1 oder Lasersystem, Optik, insbesondere Linsensystem 2, Flächenlichtmodulator 4, wobei die Abstreifeinrichtung an die Baueinheit 0 koppel- oder entkoppelbar ist.
1 UV-LED-Beamer, 2 Linsensystem; 3 Anordnung der flächigen Lichtquelle 1, des Flächenlichtmodulator 4 und/oder der Linsensystem/Optik 2; 4 Flächenlichtmodulator; 5 Belichtungsfeld; 6 Lichthärtender flüssiger Kunststoff, insbesondere Mischung umfassend Monomere, Zusammensetzung umfassend dentale Monomere; 7 Bad; 8 Behälter; 10 ausgehärteter lichthärtender Kunststoff / Kunststoffkörper; 11 Kupplungselement, wie Schwert, das Schwert hat vorzugsweise eine an die Kupplungsvorrichtung bzw. Kerbe A' angepasste Geometrie; 12 Halterung, Bauplattform;
13 zu druckendes Motiv, 13a bis 13 f einzeln dargestellten Bilder (13a, 13 b, 13c, 13d, 13e, 13f) zur Erzeugung des zu druckenden Motivs; 14 Motiv der ausgeschalteten Leuchtpunkte/Motiv nicht belichtete Pixel, 14a bis 14f zu belichtende Motiveinzelbilder mit homogenisierter Lichtmengenverteilung. Einzeln dargestellten Bilder (14a, 14b, 14c, 14d, 14e, 14f) zur Erzeugung des zu druckenden Motivs 13, dargestellt als einzeln dargestellte Bilder (13a, 13b, 13c, 13d, 13e, 13f) zur Erzeugung des zu druckenden Motivs beim Scrollen mit einer statischen Überlagerung des Motivs der ausgeschalteten Leuchtpunkte (14);
15 Zuführeinrichtung; 16 Auffangbehälter; 17 Leitung, 17a Saugleitung, 17b Zuführleitung; 18 Filter; 19 Pumpe, insbesondere Schlauchpumpe; 20 (C) Abstreifeinrichtung, Rakel; 20a Element, insbesondere Platte; 20b Fixierung, insbesondere Schraube; 20c elastisches Element, insbesondere Federung (E); 21a Oberfläche Bad während Überlauf Kunststoff in Auffangbehälter; 21b Oberfläche Bad entsprechend zur Belichtung oder nach Einstellung der Oberfläche mittels Abstreifeinrichtung, insbesondere planare Oberfläche, Rakel, 22 Kupplungsvorrichtung, A' Kerbe; 23 Dämpfer; A# Bewegungsrichtung; D Schleppverfahren, E mittels Stiftschrauben gehaltene Druckfedern, z1: Schichtdicke; x,y; x1,y1: Schicht als Ebene

## Patentansprüche

1. Vorrichtung, umfassend eine Baueinheit (0) mit einer Lichtquelle (1), zum Herstellen eines dreidimensionalen Objektes (10) mittels Belichtung eines flüssigen, lichthärtenden Kunststoffes (6), mit einem Behälter (8) zur Aufnahme eines Bades (7) des lichthärtenden, flüssigen Kunststoffes (6), mit einer Bauplattform (12) zur Positionierung des Objektes (10) relativ zur Oberfläche (21a, 21b) des Bades (7), wobei die Lichtquelle (1) und eine Abstreifeinrichtung (20) koppelbar sind und die Abstreifeinrichtung (20) vor der Lichtquelle (1) und/oder vor dem Belichtungsfeld (5) angeordnet ist, wobei die Abstreifeinrichtung (20) eine Kupplungsvorrichtung (22) aufweist und der Lichtquelle (1) oder der Baueinheit (0) ein Kupplungselement (11) zugeordnet ist, mit dem die Abstreifeinrichtung (20) vor der Lichtquelle (1) und/oder dem Belichtungsfeld (5) hergeschoben wird, **gekennzeichnet dadurch, dass** das Kupplungselement (11) lösbar an der Kupplungsvorrichtung (22) eingreift und das Kupplungselement (11) formschlüssig zur Kupplungsvorrichtung (22) ausgebildet ist, wobei das Kupplungselement (11) kraftschlüssig, elektrisch oder magnetisch lösbar mit der Kupplungsvorrichtung (22) koppelbar ist, wobei die Kupplungsvorrichtung (22) mindestens ein Element (20a) aufweist und das obere Ende der Abstreifeinrichtung (20) in Form eines Elementes (20a) ausgebildet ist, wobei diese Elemente (20a) mit mindestens einem elastischen Element (20c) und mit mindestens einer Fixierung (20b) aneinander festgelegt sind, und wobei das Kupplungselement (11) formschlüssig seitlich an die Elemente (20a) eingreift und formschlüssig zwischen den beiden mit einem elastischen Element (20c) und einem Fixierelement (20b) festgelegten Elementen (20a) mit einer definierten Kraft zwischen den beiden Elementen (20a) durchführbar ist, wobei die Vorrichtung einen Dämpfer (23) aufweist, der ein Durchführen oder Durchrutschen des Kupplungselementes (11) zwischen den beiden Elementen (20a) der Kupplungsvorrichtung (22) auslöst.

2. Vorrichtung nach Anspruch 1, **dadurch gekennzeichnet, dass** die Baueinheit (0) zum Herstellen einer homogenisierten Lichtmengenverteilung dient und eine Anordnung (3) aufweist, umfassend eine flächig abstrahlende Lichtquelle (1), einen Flächenlichtmodulator (4) und eine Optik (2), insbesondere bildet ein Linsensystem die Optik (2).

3. Vorrichtung nach Anspruch 1 oder 2, **dadurch gekennzeichnet, dass** der flüssige, lichthärtende Kunststoff (6), insbesondere der überstehende Kunstsoff der gewölbten Oberfläche (21a), mittels einer entlang einer Achse des Behälters verfahrbaren Abstreifeinrichtung (20) in mindestens einen Auffangbehälter (16) überführbar ist, wobei sich insbesondere eine Oberfläche (21b) als Projektionsfläche bildet.

4. Vorrichtung nach einem der Ansprüche 1 bis 3, **dadurch gekennzeichnet, dass** die verfahrbare Abstreifvorrichtung (20) mittelbar über den Vortrieb oder Vorschub der Lichtquelle, der Baueinheit oder der Gesamtbaueinheit entlang einer Achse des Behälters geführt wird.

5. Verfahren zum Herstellen eines dreidimensionalen Objektes (10) mit einer Vorrichtung nach einem der Ansprüche 1 bis 4, das schichtweise erzeugt wird, indem jeweils eine Schicht (x1,y1) als Projektionsfläche eines flüssigen, lichthärtenden Kunststoffes (6) hergestellt wird, und in einem Belichtungsfeld (5) zumindest teilweise mittels Licht einer Lichtquelle (1) polymerisiert wird, **dadurch gekennzeichnet, dass**
a) eine Schicht (x1,y1) des flüssigen, lichthärtenden Kunststoffes (6) auf einer Bauplattform (12) oder einer polymerisierten Schicht erzeugt wird, indem in einem Bad (7) des flüssigen, lichthärtenden Kunststoffs (6) eine Abstreifeinrichtung (20), die an eine Lichtquelle (1) koppelbar ist, vor dem Belichtungsfeld (5) und/oder vor der Lichtquelle (1) hergeführt wird, und
i) eine zu polymerisierende Schicht (x1, y1) als Projektionsfläche erhalten wird, und ii) die in i) erzeugte zu polymerisierende Schicht (x1,y1) als Projektionsfläche des flüssigen, lichthärtenden Kunststoffes (6) mit einem Belichtungsfeld (5) mittels Licht der Lichtquelle (1) im Schritt a) polymerisiert wird, und
b)
i) im Bereich eines Umkehrpunktes der Wegstrecke der Abstreifeinrichtung (20) oder der Lichtquelle (1) wird die Abstreifeinrichtung (20) so an die Lichtquelle (1) gekoppelt, dass die Lichtquelle (1) erneut die Abstreifeinrichtung (20) vor sich herführt, und optional
ii) wird im Schritt b) die Bauplattform (12) um eine Schichtdicke (z1) abgesenkt und optional eine Schicht (x,y) des flüssigen, lichthärtenden Kunststoffes über der zuvor polymerisierten Schicht (x1,y1) erzeugt, und optional
c) mindestens ein bis mehrmaliges Wiederholen der Schritte a) und b),
wobei die Abstreifeinrichtung (20) eine Kupplungsvorrichtung (22) aufweist und der Lichtquelle (1) oder der Baueinheit (0) ein Kupplungselement (11) zugeordnet ist, mit dem die Abstreifeinrichtung (20) vor der Lichtquelle (1) und/oder dem Belichtungsfeld (5) hergeschoben wird.

6. Verfahren nach Anspruch 5, **dadurch gekennzeichnet, dass** die Schritte a) i) eine zu polymerisierende Schicht (x1, y1) als Projektionsfläche erhalten wird, und ii) die in i) erzeugte zu polymerisierende Schicht (x1,y1) als Projektionsfläche des flüssigen, lichthärtenden Kunststoffes (6) mit einem Belichtungsfeld (5) mittels Licht der Lichtquelle (1) polymerisiert wird, simultan in Schritt a) ablaufen.

7. Verfahren nach Anspruch 5 oder 6, **dadurch gekennzeichnet, dass** die verfahrbare Abstreifeinrichtung (20) und die Lichtquelle (1), insbesondere die Lichtquelle der Baueinheit (0), eine verfahrbare gesamte Baueinheit (0#) mit Rutschkupplung, insbesondere Sperrkörperkupplung, bilden.

8. Verfahren nach einem der Ansprüche 5 bis 7, **dadurch gekennzeichnet, dass** die gesamte Baueinheit (0#) oder die Baueinheit (0) zur Homogenisierung der Lichtmengenverteilung einen Flächenlichtmodulator (4) aufweist, der eine Vielzahl von in Reihen und Spalten angeordneten ansteuerbaren kippbaren Mikrospiegeln aufweist, bei dem das Licht einer flächig abstrahlenden Lichtquelle (1) über eine Optik (2) abgebildet wird und ein Belichtungsfeld (5) der abgebildeten Lichtquelle (1) über eine Projektionsfläche geführt wird, wobei eine zur Mitte des Belichtungsfelds hin zunehmende Anzahl von Pixeln nicht belichtet wird, so dass im zeitlichen Integral eine Homogenisierung der Lichtintensität aller auf der Projektionsfläche belichteten Pixel erreicht wird.

9. Verfahren nach einem der Ansprüche 5 bis 8, **dadurch gekennzeichnet, dass** die Baueinheit (0# oder 0) und damit das Belichtungsfeld und die Abstreifeinrichtung (20) simultan periodisch über die Projektionsfläche geführt wird, wobei vorzugsweise als Projektionsfläche die Oberfläche eines flüssigen lichthärtenden Kunststoffs (10) verwendet wird.

10. Verwendung einer Vorrichtung nach einem der Ansprüche 1 bis 9 zur Herstellung von zumindest Teilen dentaler prothetischer Versorgungen.

11. Ein durch Computer lesbares Medium, auf dem ein Computerprogramm zur Verwendung einer Vorrichtung nach einem der Ansprüche 1 bis 4 gespeichert ist, welches, wenn es durch einen Mikroprozessor ausgeführt wird, angepasst wird, um das Verfahren nach einem der Ansprüche 5 bis 9 zur Steuerung einer Vorrichtung nach einem der Ansprüche 1 bis 4 durchzuführen.

12. Ein Programmelement zur Steuerung der Vorrichtung nach einem der Ansprüche 1 bis 4, das, wenn es durch einen Mikroprozessor ausgeführt wird, angepasst wird, um das Verfahren nach einem der Ansprüche 5 bis 9 durchzuführen.

## Claims

1. Device comprising an assembly (0) with a light source (1), for production of a three-dimensional object (10) by means of illuminating a liquid light-curing plastic material (6), having a container (8) for accommodation of a bath (7) of the light-curing liquid plastic material (6), having a building platform (12) for positioning the object (10) relative to the surface (21a, 21b) of the bath (7), wherein the light source (1) and a stripping device (20) are couplable and in that the stripping device (20) is arranged in front of the light source (1) and/or in front of the illuminated field (5), wherein the stripping device (20) exhibits a coupling device (22) and a coupling element (11) is assigned to the light sources (1) or the assembly (0), with which the stripping device (20) is guided in front of the light source (1) and/or in front of the illuminated field (5),
**characterized in that** the coupling element (11) engages the coupling device (22) in detachable manner and **in that** the coupling element (11) is formed to be form-fitting with the coupling device (22), **in that** the coupling element (11) is couplable to the coupling device in detachable manner in force-locking, electrical or magnetic manner, wherein the coupling device (22) comprises at least one element (20a) and **in that** the upper end of the stripping device (20) is formed to take the shape of an element (20a), whereby said elements (20a) are attached against each other by at least one elastic element (20c) and at least one fixation (20b), and wherein the coupling element (11) engages the elements (20a) laterally in form-fitting manner and is guided through, with a defined force, between the two elements (20a) that are attached by an elastic element (20c) and a fixation element (20b) in force-locking manner, wherein **in that** the device has an attenuator (23) that triggers a guiding-through or sliding-through of the coupling element (11) between the two elements (20a) of the coupling device (22).

2. Device according to claim 1, **characterised in that** the assembly (0) serves for producing a homogenised distribution of light intensity and comprises an arrangement (3) that comprises a spatially emitting light source (1), a spatial light modulator (4), and an optical system (2), with a lens system, in particular, being the optical system (2).

3. Device according to claims 1 or 2, **characterised in that** the liquid light-curing plastic material (6), in particular the protruding plastic material of the arched surface (21a), can be transferred into the at least one collecting container (16) by means of a stripping device (20) that can be driven along an axis of the container, whereby, in particular, a surface (21b) is formed as projection surface.

4. Device according to any one of the claims 1 to 3, **characterised in that** the drivable stripping device (20) is guided directly along an axis of the container by means of the drive or propulsion of the light source, assembly or entire assembly.

5. Method for producing a three-dimensional object (10) with a device according to any of claims 1 to 4, that is generated layer-by-layer, by one layer (x1, y1) each being produced as a projection surface of a liquid light-curing plastic material (6) and being polymerised in an illuminated field (5), at least in part, by light of a light source (1), **characterised in that**
a) a layer (x1, y1) of the liquid light-curing plastic material (6) is generated on a building platform (12) or on a polymerised layer by guiding a stripping device (20), which is couplable to a light source (1), in a bath (7) of the liquid light-curing plastic material (6) ahead of the illuminated field (5) and/or ahead of the light source (1), and
i) a layer (x1, y1) to be polymerised is obtained as projection surface; and ii) the layer (x1, y1) to be polymerised generated in i) is polymerised as projection surface of the liquid light-curing plastic material (6) using an illuminated field (5) by means of light of the light source (1) in step a); and,
b)
i) in the region of a reversal point of the pathway of the stripping device (20) or of the light source (1), the stripping device (20) is appropriately coupled to the light source (1) such that the light source (1) again guides the stripping device (20) ahead of itself; and, optionally,
ii) in step b), the building platform (12) is lowered by one layer thickness (z1) and, optionally, a layer (x, y) of the liquid light-curing plastic material is generated above the previously polymerised layer (x1, y1); and, optionally,
c) steps a) and b) are repeated at least one to multiple times, wherein
the stripping device (20) exhibits a coupling device (22) and a coupling element (11) is assigned to the light sources (1) or the assembly (0), with which the stripping device (20) is guided in front of the light source (1) and/or in front of the illuminated field (5).

6. Method according to claim 5, **characterised in that** steps a) i) a layer (x1, y1) to be polymerised is obtained as projection surface; and ii) the layer (x1, y1) to be polymerised generated in i) is polymerised as projection surface of the liquid light-curing plastic material (6) using an illuminated field (5) by means of light of the light source (1) take place simultaneously in step a).

7. Method according to claim 5 or 6, **characterised in that** the drivable stripping device (20) and the light source (1), in particular the light source of the assembly (0), form a drivable assembly (0#) with a slip clutch, in particular with barrier body clutch.

8. Method according to any one of the claims 5 to 7, **characterised in that** the entire assembly (0#) or the assembly (0) for homogenising the distribution of light intensity comprises a spatial light modulator (4) that comprises a multitude of tiltable micro-mirrors that are arranged in rows and columns and can be triggered, in which the light of a spatially emitting light source (1) is projected by means of an optical system (2) and an illuminated field of the projected light source (1) is guided across a projection surface, whereby, towards the middle of the illuminated field, an increasing number of pixels is not being illuminated such that a homogenisation of the light intensity of all pixels that are illuminated on the projection surface is attained when integrating over time.

9. Method according to any one of the claims 5 to 8, **characterised in that** the assembly (0# or 0) and thus the illuminated field and the stripping device (20) are simultaneously periodically guided across the projection surface, whereby, preferably, the surface of a liquid light-curing plastic material (10) is used as projection surface.

10. Use of a device according to any one of the claims 1 to 9 for the production of at least parts of dental prosthetic restorations.

11. Computer-readable medium on which a computer program for use of a device according to any one of the claims 1 to 4 is stored, which, when executed by a microprocessor, is made operable in order to be able to implement the method according to any one of the claims 5 to 9, for controlling a device according to any one of the claims 1 to 4.

12. A program element for controlling the device according to any one of the claims 1 to 4, which, when executed by a microprocessor, is made operable in order to be able to implement the method according to any one of the claims 5 to 9.

## Revendications

1. Dispositif comprenant une unité modulaire (0) avec une source lumineuse (1), pour la fabrication d'un objet tridimensionnel (10) par exposition à la lumière d'une résine liquide photopolymérisable (6), un récipient (8) destiné à recevoir un bain (7) de résine liquide photopolymérisable (6) et une plate-forme modulaire (12) pour le positionnement de l'objet (10) par rapport à la surface (21a, 21b) du bain (7), la source lumineuse (1) et un dispositif de raclage (20) pouvant être couplés et le dispositif de raclage (20) étant disposé devant la source lumineuse (1) et/ou devant le champ d'exposition (5), le dispositif de raclage (20) présentant un dispositif d'accouplement (22) et un élément d'accouplement (11) associé à la source lumineuse (1) ou à l'unité modulaire (0) permettant de pousser le dispositif de raclage (20) devant la source lumineuse (1) et/ou le champ d'exposition (5), **caractérisé en ce que** l'élément d'accouplement (11) s'engage de manière amovible sur le dispositif d'accouplement (22) et **en ce que** l'élément d'accouplement (11) est conçu par complémentarité de forme avec le dispositif d'accouplement (22), l'élément d'accouplement (11) pouvant être couplé au dispositif d'accouplement (22) de manière amovible par adhérence, électriquement ou magnétiquement, le dispositif d'accouplement (22) présentant au moins un élément (20a) et l'extrémité supérieure du dispositif de raclage (20) étant conçue sous la forme d'un élément (20a), ces éléments (20a) étant fixés les uns aux autres avec au moins un élément élastique (20c) et avec au moins une fixation (20b), et l'élément d'accouplement (11) s'engageant latéralement par complémentarité de forme sur les éléments (20a) et pouvant être passé par complémentarité de forme entre les deux éléments (20a) fixés par un élément élastique (20c) et un élément de fixation (20b) avec une force définie entre les deux éléments (20a), le dispositif présentant un amortisseur (23) qui déclenche un passage ou un glissement de l'élément d'accouplement (11) entre les deux éléments (20a) du dispositif d'accouplement (22).

2. Dispositif selon la revendication 1, **caractérisé en ce que** l'unité modulaire (0) sert à produire une répartition homogénéisée de la lumière et présente une disposition (3) comprenant une source lumineuse (1) émettant en surface, un modulateur de lumière en surface (4) et une optique (2), un système de lentilles constituant en particulier l'optique (2).

3. Dispositif selon la revendication 1 ou 2, **caractérisé en ce que** la résine liquide photopolymérisable (6), en particulier la résine dépassant de la surface bombée (21a), peut être transférée dans au moins un récipient collecteur (16) au moyen d'un dispositif de raclage (20) déplaçable le long d'un axe du récipient, une surface (21b) se formant en particulier comme surface de projection.

4. Dispositif selon l'une des revendications 1 à 3, **caractérisé en ce que** le dispositif de raclage (20) déplaçable est guidé indirectement par l'avancement ou la progression de la source lumineuse, de l'unité modulaire ou de l'unité modulaire globale le long d'un axe du récipient.

5. Procédé de fabrication d'un objet tridimensionnel (10), utilisant un dispositif selon l'une des revendications 1 à 4, lequel est produit par couches, par la fabrication respective d'une couche (x1, y1) comme surface de projection d'une résine liquide photopolymérisable (6), et sa polymérisation dans un champ d'exposition (5) au moins partiellement par la lumière d'une source lumineuse (1), **caractérisé en ce que**
a) une couche (x1, y1) de résine liquide photopolymérisable (6) est produite sur une plate-forme modulaire (12) ou une couche polymérisée, en faisant passer devant le champ d'exposition (5) et/ou devant la source lumineuse (1) un dispositif de raclage (20) qui peut être couplé à une source lumineuse (1) dans un bain (7) de résine liquide photopolymérisable (6), et
i) une couche à polymériser (x1, y1) est obtenue comme surface de projection, et ii) la couche à polymériser (x1, y1) produite en i) est polymérisée comme surface de projection de la résine liquide photopolymérisable (6) avec un champ d'exposition (5) par la lumière de la source lumineuse (1) dans l'étape a), et
b)
i) dans la zone d'un point d'inversion du trajet du dispositif de raclage (20) ou de la source lumineuse (1), le dispositif de raclage (20) est couplé à la source lumineuse (1) de telle sorte que la source lumineuse (1) fait à nouveau passer le dispositif de raclage (20) devant elle, et facultativement
ii) la plate-forme modulaire (12) est abaissée, à l'étape b), d'une épaisseur de couche (z1) et, facultativement, une couche (x, y) de résine liquide photopolymérisable est produite au-dessus de la couche (x1, y1) précédemment polymérisée, et facultativement
c) les étapes a) et b) sont répétées au moins une à plusieurs fois,
le dispositif de raclage (20) présentant un dispositif d'accouplement (22) et un élément d'accouplement (11) associé à la source lumineuse (1) ou à l'unité modulaire (0), permettant de pousser le dispositif de raclage (20) devant la source lumineuse (1) et/ou le champ d'exposition (5).

6. Procédé selon la revendication 5, **caractérisé en ce que** les étapes a), i) une couche à polymériser (x1, y1) est obtenue comme surface de projection et ii) la couche à polymériser (x1, y1) produite en i) est polymérisée comme surface de projection de la résine liquide photopolymérisable (6) avec un champ d'exposition (5) par la lumière de la source lumineuse (1), se déroulent simultanément à l'étape a).

7. Procédé selon la revendication 5 ou 6, **caractérisé en ce que** le dispositif de raclage (20) déplaçable et la source lumineuse (1), en particulier la source lumineuse de l'unité modulaire (0), forment une unité modulaire globale déplaçable (0#) avec un accouplement à friction, en particulier un accouplement à corps de blocage.

8. Procédé selon l'une des revendications 5 à 7, **caractérisé en ce que** l'unité modulaire globale (0#) ou l'unité modulaire (0) présente, pour l'homogénéisation de la répartition de la lumière, un modulateur de lumière surfacique (4) qui présente une pluralité de micromiroirs basculants pouvant être commandés et disposés en rangées et en colonnes, dans lequel la lumière d'une source lumineuse (1) émettant en surface est reproduite par une optique (2) et un champ d'exposition (5) de la source lumineuse (1) reproduite est guidé au-dessus d'une surface de projection, un nombre croissant de pixels vers le centre du champ d'exposition n'étant pas exposé, ce qui fait que l'on obtient une homogénéisation de l'intensité lumineuse de tous les pixels exposés sur la surface de projection dans l'intégrale temporelle.

9. Procédé selon l'une des revendications 5 à 8, **caractérisé en ce que** l'unité modulaire (0# ou 0) et donc le champ d'exposition et le dispositif de raclage (20) sont guidés simultanément et périodiquement au-dessus de la surface de projection, la surface d'une résine liquide photopolymérisable (10) étant de préférence utilisée comme surface de projection.

10. Utilisation d'un dispositif selon l'une des revendications 1 à 9 pour la fabrication d'au moins des parties de restaurations prothétiques dentaires.

11. Support lisible par ordinateur, sur lequel est stocké un programme informatique pour l'utilisation d'un dispositif selon l'une des revendications 1 à 4, qui, lorsqu'il est exécuté par un microprocesseur, est adapté pour mettre en œuvre le procédé selon l'une des revendications 5 à 9 pour commander un dispositif selon l'une des revendications 1 à 4.

12. Un élément de programme pour la commande du dispositif selon l'une des revendications 1 à 4, qui, lorsqu'il est exécuté par un microprocesseur, est adapté pour mettre en œuvre le procédé selon l'une des revendications 5 à 9.
